# EUROPEAN PATENT SPECIFICATION

(11) **EP 3 525 932 B1**
(45) Date of publication and mention of the grant of the patent: **22.09.2021**
(21) Application number: 17783872.9
(22) Date of filing: 16.10.2017
(51) Int. Cl.: B01L 3/00

(54) **A DEVICE FOR COLLECTING AND/OR HANDLING A LIQUID SAMPLE AND FOR SEPARATING SAID LIQUID SAMPLE INTO DIFFERENT COMPONENTS AND A METHOD FOR USING THE SAME**
VORRICHTUNG ZUR SAMMLUNG UND/ODER HANDHABUNG EINER FLÜSSIGKEITSPROBE UND ZUR TRENNUNG DER BESAGTEN FLÜSSIGKEITSPROBE IN VERSCHIEDENEN KOMPONENTEN UND VERFAHREN ZUR VERWENDUNG DAVON
DISPOSITIF DESTINÉ À COLLECTER ET/OU À MANIPULER UN ÉCHANTILLON LIQUIDE ET À SÉPARER LEDIT ÉCHANTILLON LIQUIDE EN DIFFÉRENTS COMPOSANTS ET SON PROCÉDÉ D'UTILISATION

(30) Priority: 14.10.2016 EP 16194052
(43) Date of publication of application: 21.08.2019
(73) Proprietor: Blink AG, 07747 Jena (DE)
(72) Inventor: SCHULZ, Torsten, 07749 Jena (DE); BÖSNECK, Horst, 07745 Jena (DE); ERMANTRAUT, Eugen, 07749 Jena (DE)
(74) Representative: Engelhard, Markus
(86) International application number: PCT/EP2017/076352
(87) International publication number: WO 2018/069548

(56) References cited:
- US-A- 3 887 466
- US-A1- 2013 288 874

## Description

### FIELD OF THE INVENTION

The present invention relates to a device for collecting and/or handling a liquid sample and for separating said liquid sample into different components. Furthermore, the present invention relates to an insert for a centrifuge to be used with the device, to a centrifuge, comprising such insert and to a method of separating a liquid sample into components.

### BACKGROUND OF THE INVENTION

There exist numerous devices of diverse complexity for obtaining blood samples. The devices most commonly used aim at the obtainment of large volumes of whole blood, such as volumes of several milliliters (e. g. "Vacutainer®" of the company BD, USA). For obtaining capillary blood, frequently, so-called end-to-end capillaries are used having a defined volume and enabling the withdrawal of a defined volume of sample due to the defined volume of such capillary. These capillaries are sometimes equipped with a porous plug at one end which serves the purpose of limiting the volume withdrawn from the patient and of keeping the corresponding end of such capillary clean. If the sample is subsequently to be ejected again, this is achieved by exerting pressure at one end of the capillary thus evacuating the capillary via its other end. A disadvantage of this capillary device is that the handling is cumbersome and the use of additional means, such as a pump or piston or syringe is necessary to obtain and manipulate the sample. Open capillaries furthermore run the risk of contamination of the sample and of the surroundings and additionally pose problems with infectious materials. If no pump is used to recover the sample, then additional handling steps are necessary, such as centrifugation or placing one end of the capillary onto a porous layer, such as filter paper. In order to facilitate the manipulation of samples in capillaries, they are sometimes combined with another vessel attached to such capillary. A typical example of this type of product is the Microvette® or the "Minivette®" both of the company Sarstedt. The Minivette product comprises a capillary including a plug and a container attached thereto including a piston. First the capillary is filled with the sample by capillary forces, and subsequently, the sample is ejected by exerting pressure through the piston. This product does not allow a delivery of parts of the capillary volumes. In particular, to the best knowledge of the inventors, there is no device known that allows both the obtainment of a sample as well as a portioning of the obtained sample into partial sub volumes.

Once a sample has been obtained, the further manipulation of such sample is also of importance. Taking blood as an example, one of the important tasks in medical diagnostics is the production of plasma and/or serum. This is typically achieved by centrifuging the sample in the corresponding sampling vessel. After separation of the cellular components from the liquid components, the plasma or the serum is pipetted and further manipulated. Upon centrifugation, the sample vessel is moved about the rotational axis of the centrifuge. The effective centrifugal force causes an accelerated sedimentation and a solidification of the so-called blood clot or blood cake which is, effectively the cellular fraction of the blood. The solidity of such sedimented cellular fraction is decisive for the subsequent withdrawal of plasma or serum. Such withdrawal is done using a pipette with the centrifugal tube being in an upright position. A contact of the cellular fraction with the tip of the pipette which would cause a mixing of the two phases is to be avoided. This is the standard procedure in a laboratory but it requires the presence of a corresponding lab centrifuge and a qualified lab technician. In a further variant of this methodology, there are sample tubes which are filled with a thixotropic gel which allows a separation of plasma and the cellular fraction. Furthermore, in other samples, there may be used a filter insert allowing the separation of the phases. These measures allow a more permanent separation of the different phases and increase the stability of the blood clot and may also reduce the time necessary for centrifugation. In a further variant of such methodology, the cells are filtered without any centrifugation through a membrane filter or a hollow fiber membrane using tangential flow and a pump. In the latter method, a blood sample is pumped through hollow fibers having asymmetrical pores. The plasma penetrates the hollow fiber wall and can be collected outside of the hollow fiber. Cells cannot permeate through the membrane and remain in the inside volume of the hollow fiber. Because of the tangential flow in relation to the membrane, a clogging of the membrane pores is avoided. By moving the sample back and forth through the hollow fibers, the cellular fraction is enriched and/or the plasma fraction can be separated. However, the method requires a considerable effort in terms of apparatuses used and is characterized by some significant dead volume(s) which limits its use to considerably large volumes of sample. Hence, small samples in the sub milliliter range cannot be processed using this technology.

US 3,887,466 discloses a self-contained fluid separator assembly capable of separating blood into its component parts of plasma or serum, the light phase, and cellular portion, the heavy phase, wherein the two ends are sealed by elastomeric closures and wherein a piston responsive to centrifugal force is slidably disposed within the container.

The methods and devices known from the prior art involving capillary technology are either cumbersome in that they require the use of various additional devices, such as syringes, pumps and/or filters, or they raise the risk of contamination and/or infection. Moreover, they cannot be used in themselves for dispensing partial volumes of sample. A separation of the sample into its various components has to occur outside of the sampling device or the separated material has to be collected from the device with a separate tool (e.g. Microvette). Moreover none of the known devices provides a standardized interface for integration into automated workflows. Accordingly, it was an object of the present invention to provide for a device and a method overcoming the problems associated with the prior art.

### SUMMARY OF THE INVENTION

The objects of the invention are solved by a device for collecting and/or handling a liquid sample and for separating said liquid sample into different components having different densities, said device comprising:
- a tubular container having two opposite ends and being adapted to receive a liquid sample,
   wherein said two ends are configured such that said two ends are open when the sample is collected, and one end is closed and the other end remains open when a separation process for separating said liquid sample into different components by centrifugal force takes place, wherein, said end that remains open when a separation process for separating said liquid sample into different components by centrifugal force takes place, is a permanently open end,
- a valve located in said tubular container and being actuated by centrifugal force,
- a compartment located in and forming part of said tubular container which compartment is configured such that it receives a component of said liquid sample and becomes closed by said valve when a defined centrifugal force is exerted upon said tubular container, thereby separating said component within said compartment from other component(s) of said liquid sample outside said closed compartment,
- an interface to a dispensing and/or aspirating device, said interface being configured to establish a connection between said tubular container and said dispensing and/or aspirating device, such that when such connection is established, said dispensing and/or aspirating device may dispense liquid(s) from said tubular container, e. g. said other component(s) of said liquid sample outside said compartment, or said dispensing and/or aspirating device may aspirate liquid(s) into said tubular container, e. g. liquids for further processing said liquid sample.

It should be noted that the end that remains open even when a separation process for separating said liquid sample into different components by centrifugal force takes place, is not closed under any circumstances and is always open in any use of said device. According to the invention, said open end is a permanently open end. Said end is herein also sometimes referred to as "permanently open end".

In one embodiment, the device according to the present invention further comprises:
- a capillary tube located in said tubular container, or being part thereof, and being configured to collect and receive said liquid sample prior to separation of said liquid sample by centrifugal force.

In one embodiment, said capillary tube is an end to end capillary tube, wherein one end of said capillary tube is located at the permanently open end of said tubular container which remains open when a separation process by centrifugal force takes place (i.e. the permanently open end), and/or forms such permanently open end of said tubular container and/or is in fluid connection with such permanently open end, and the other end of said capillary tube is located within said tubular container or attached thereto and is, prior to a separation process for separating said liquid sample into different components by centrifugal force, in fluid connection with said compartment configured to receive a component of said liquid sample.

In a preferred embodiment, said capillary tube forms the end of said tubular container which remains open when a separation process by centrifugal force takes place and/or is in fluid connection with such permanently open end. In a further preferred embodiment, said capillary tube is in fluid connection with the permanently open end of said tubular container.

In one embodiment, said valve is
- a piston slidably inserted in said tubular container and defining, by one of the ends of said piston and by the internal geometry of said tubular container, said compartment configured to receive a component of said sample, or
- a piston slidably and twistably inserted in said tubular container, said piston having a front end facing in the direction of said end of said tubular container remaining open during a separation process by centrifugal force and a back end facing in the opposite direction, and said piston having a hollow channel running through said piston from said front end to a side of said piston, said hollow channel allowing access to said compartment for receiving a component of said liquid sample, when said hollow channel is in fluid connection with said compartment.

In one embodiment, said tubular container is not evacuated, e.g. of air, prior to receiving a liquid sample.

In one embodiment, the device according to the present invention further comprises a dispensing and/or aspirating device connected to said tubular container through said interface, forming a fluid connection between said dispensing and/or aspirating device and said tubular container.

The objects of the present invention are also solved by an insert for a centrifuge comprising:
- a receptacle for a device according to the present invention, as defined above, said receptacle encompassing a volume for receiving said device and allowing the positioning of said device in a centrifugal direction, said receptacle having an exterior end and an interior end and being configured such that, during centrifugation, any centrifugal force exerted acts towards the exterior end of said receptacle;
- a stop located at said exterior end of said receptacle against which, during centrifugation, said device according to the present invention is pressed, said stop being configured to establish a contact to said valve located in said tubular container of said device and being actuated by centrifugal force,
and a device according to the present invention.

In one embodiment, said stop is a pin, a tappet, a stamp, a pillar, a groove with a back wall, a pestle, an elevation from the exterior end, or a wall of said receptacle at said exterior end. The objects of the present invention are also solved by a centrifuge comprising the insert according to the present invention, as defined above.

The objects of the present invention are also solved by a method of separating a liquid sample into components, said method comprising the steps:
- using the device according to the present invention, as defined above, for receiving a liquid sample therein in said tubular container,
- separating at least one sample component of a defined density from the remaining part of said liquid sample or from other component(s) thereof into said compartment by centrifugation of said device according to the present invention, preferably at a first centrifugation speed,
- closing and sealing said compartment by centrifugation, preferably at a second centrifugation speed, wherein said second centrifugation speed is preferably higher than said first centrifugation speed,
- stopping the centrifugation and, optionally, manipulating said separated at least one sample component of a defined density or the remaining part of the sample or said other component(s) thereof by adding thereto or withdrawing therefrom one or several defined volumes of liquids by means of a dispensing and/or aspirating device temporarily connected to said device according to any of claims 1-5 via said interface thereof.

In one embodiment, the liquid sample is a biological liquid including at least one solid component, e.g. a cellular component, and at least one liquid component.

In one embodiment, the liquid sample is selected from blood, sweat, tears, sputum, semen, lymph, ascites, amniotic fluid, bile, breast milk, synovial fluid, saliva, peritoneal fluid, pericardial fluid, cerebrospinal fluid, chyle, and urine, wherein, preferably, said liquid is blood.

A preferred embodiment of the invention is as follows:
According to this embodiment, the device (1, 1', 1") according to the present invention is a device for collecting and/or handling a liquid sample and for separating the liquid sample into different components having different densities. The device has a tubular container (2, 2', 2") which has two opposite ends (3, 3', 3") and which is adapted to receive a liquid sample. The two ends of the container are configured in a way that both ends are open when the sample is collected. Thereafter, when a separation process takes place, one end (3.2, 3.2', 3.2.1', 3.2") is closed and the other end (3.1, 3.1', 3.1.1', 3.1") remains open ("permanently open end"). The separation process is achieved by subjecting the device according to the present invention to a centrifugal force. The device according to the present invention also comprises a valve (4, 4.1', 4", 4.1") which is located in the tubular container and which is actuated by a centrifugal force. Moreover, the device according to the present invention comprises a compartment (5, 5', 5a", 5b") which is located in the tubular container and forms part thereof. When a defined centrifugal force is exerted upon the tubular container, for example by centrifugation, the compartment receives a component of the liquid sample and becomes closed (5, 5', 5b") by the valve that is actuated by centrifugal force. Hence, by such exertion of such defined centrifugal force, a component of the liquid sample is separated into and within the compartment (5, 5', 5b") and is thus separated from one or several other component(s) of the liquid sample, which are outside the closed compartment (5, 5', 5b"). It should be noted that the component that becomes separated into and within the compartment is a component that has a higher density than other component(s) of the liquid sample. By the action of a centrifugal force, such heavier component migrates towards the compartment and becomes enclosed therein through the action of the valve which is actuated by the centrifugal force exerted. The device for collecting and/or handling a liquid sample and for separating said liquid sample into different components having different densities also has an interface (6, 6', 6") to a dispensing and/or aspirating device (8, 8', 8"), e.g. a pipette. This interface allows establishing a connection, preferably a fluid connection, between the tubular container (2, 2', 2") and the dispensing and/or aspirating device (8, 8', 8"), and by such connection, the dispensing and/or aspirating device may dispense liquid(s) from the tubular container or may aspirate liquid(s) into the tubular container. For example, the components of the liquid sample that have not been separated into the above-mentioned compartment may be dispensed by the action of such dispensing device. Alternatively or additionally, other liquids may be taken up into the tubular container by the aspirating device. Such other liquids may, for example, be liquids for further processing the sample or components thereof.

In one embodiment, the device according to the present invention further comprises a capillary tube (7, 7', 7") which is located in the tubular container or is part thereof and which is configured to collect and receive the liquid sample prior to separation of the liquid sample by centrifugal force. The uptake of the liquid sample into the capillary tube typically is achieved by capillary action. In some embodiments, the capillary tube may be coated, preferably internally, i.e. at the position where it comes into contact with the liquid sample, with suitable materials for further processing the sample. For example, if the liquid sample is blood, the capillary tube may be internally coated with a coagulation inhibitor and/or a buffer. Examples of suitable reagent materials to be used for internal coating of the capillary tube are EDTA, citrate, ammonium heparinate, etc. In preferred embodiments, the capillary tube is an end-to-end capillary tube, with one end of the capillary tube being located at that end (3.1, 3.1', 3.1.1', 3.1") of the tubular container which remains open when a separation process by centrifugal force takes place (i.e. the "permanently open end", and/or forms such permanently open end (3.1, 3,1', 3.1.1', 3.1") of said tubular container (2, 2', 2") and/or is in fluid connection with such permanently open end,. The other end of the capillary tube is located within the tubular container or is attached thereto. Prior to a separation process by centrifugal force, that other end is in fluid connection with the compartment (5, 5', 5a", 5b") inside the tubular container, which compartment is configured to receive a component of the liquid sample. That fluid connection continues to exist during the separation process by centrifugal force, as a result of which the component with a higher density is able to migrate to the compartment under the influence of a centrifugal force. In one embodiment, the capillary tube is made of a suitable material selected from plastics and glass. It is preferred that the capillary tube is made of a transparent material.

It should be noted that the device according to the present invention, as defined above, may be a device in which all the parts are integrated in one piece. Alternatively, various parts may be in separate pieces, and the device is assembled from such separate pieces. For example, the device may be assembled from a part including the capillary tube and another part including the tubular container and yet a further part including the valve. In one embodiment, the device may be assembled from a part including the capillary tube and another part including the tubular container and the valve. In one embodiment, the tubular container has a hollow volume inside, e.g. a cylindrical hollow volume, and may itself be composed of a vessel with a hollow volume inside and a collar (or sleeve). For example, the tubular container may be a cylindrical vessel including a hollow inside, a wall and a venting groove (2.1.2") and an opening or hole (2.1.1"). Both the venting groove and the opening are located in different positions in the wall of the cylindrical vessel. The collar (or sleeve) (2.2") surrounds the wall of the cylindrical vessel and has itself a recess or cavity (2.2.1") which will create a compartment (5, 5', 5b") when the collar is around the wall of the cylindrical vessel. Depending on the relative position of the collar, such compartment may be in fluid connection with the venting groove or the opening, thus allowing for different functionalities.

In the device according to the present invention, separation of the liquid sample into different components having different densities occurs by the action of a centrifugal force. This is typically achieved by subjecting the device according to the present invention to centrifugation. It should also be noted that the device according to the present invention does not comprise or contain a gel or a membrane or a filter for such separation purposes, i.e. it does not rely on the action of a membrane or filtration or sieving by a gel in order to achieve such separation.

Instead, the device according to the present invention contains a valve (4, 4.1', 4", 4.1") that is actuated by centrifugal force and that closes a compartment (5, 5', 5a", 5b") within the tubular container when a defined centrifugal force is exerted. In practice, the compartment is configured such that, upon exertion of a centrifugal force, a liquid sample located in the device, typically in the tubular container, starts to separate into different components of different densities, and the component(s) of a higher density migrate in the direction of the centrifugal force towards and into the compartment located in the tubular container. When a defined centrifugal force is exerted upon the tubular container and/or a defined threshold of a centrifugal force is exceeded, the compartment becomes closed by the valve actuated by centrifugal force, as a result of which the component(s) with the highest/higher density than other component(s) become separated within the compartment and become separated from other component(s) of lower density of the liquid sample which other component(s) of lower density are located outside the (now closed) compartment.

The device according to the present invention also has an interface (6, 6', 6") which allows connecting the device (1, 1', 1") for collecting and/or handling a liquid sample to a dispensing and/or aspirating device (8, 8', 8"). The interface is configured to establish such a connection, preferably a fluid connection, between the tubular container (2, 2', 2") of the device according to the present invention for collecting and/or handling a liquid sample, and a dispensing and/or aspirating device(8, 8', 8"). When such a connection is established, the dispensing and/or aspirating device may dispense liquid(s) from the tubular container, e.g. the other component(s) of the liquid sample outside the compartment, or the component from within the compartment. Alternatively, the dispensing and/or aspirating device may aspirate liquid(s) into the tubular container, e.g. liquids for further processing the liquid sample.

The valve actuated by centrifugal force may take various forms. In one embodiment, the valve is a piston (4.1, 4.1") that is slidably inserted in the tubular container and defines by one of its ends and by the internal geometry of the tubular container, the compartment that is configured to receive a component of higher density of the sample. The piston may move within the tubular container and is typically equipped with a snug fit within the tubular container. In a preferred embodiment, such "snug fit" is a sealing fit. Upon proper location of the device according to the present invention in a centrifuge, the device will be pressed into the direction of the centrifugal force, whereas the piston slidably inserted in the tubular container may be contacted and stopped in such movement by an appropriate stop within the centrifuge. As a result thereof, the piston moves relatively within the tubular container and thereby limits and defines the compartment configured to receive a component of higher density of the sample.

In other embodiments, the valve actuated by centrifugal force is a piston (4.2, 4.1") that is slidably and twistably inserted in the tubular container. Again, the piston has a snug, e.g. typically sealing fit within the tubular container, and it has a front end facing in the direction of the end of the tubular container that remains open during a separation process by centrifugal force and a back-end which faces in the opposite direction. The piston has a hollow channel (4.2.1, 4.2.1") running through it from the front end to a side of the piston. In that embodiment, the compartment for receiving a component of liquid sample is a space provided for in the tubular container, for example in the form of a recess in the internal wall of the tubular container. Additionally, the piston has a hollow channel (4.2.1, 4.2.1") which runs through the piston from the front end of the piston to a side thereof. The hollow channel allows access to the compartment (5, 5a", 5b") for receiving a component of the liquid sample, namely when the hollow channel is in liquid connection with such compartment. This will again allow a migration of a component of the sample that has a higher density towards said compartment through the liquid channel, under the influence of a centrifugal force. When the centrifugal force exceeds a defined threshold, the relative position of the piston slidably inserted in the tubular container changes, and the liquid connection to said compartment is interrupted, thus effectively sealing such compartment (5, 5b"), which now, however, also comprises a component of the liquid sample having a higher density than other component(s) of the liquid sample. These other components of the liquid sample are still located outside of the compartment and remain there even after centrifugation has been stopped. Access to these other components may be achieved by twisting the piston such that the hollow channel inside the piston is brought in fluid connection with a vent or venting channel or venting groove (2.1,2")located in another part of the tubular container. If such fluid connection is established, then there will be a fluid connection between the venting channel and those parts of the tubular container that contain the (other) components of the liquid sample of a lower density. Typically, such vent or venting channel is in fluid connection with the interface (6, 6', 6") to a dispensing and/or aspirating device (8, 8', 8"). Hence, if a dispensing and/or aspirating device is connected to the device for collecting and/or handling a liquid sample, and if the piston has been twisted within the tubular container such that it is in fluid connection with such venting channel, then by means of a dispensing and/or aspirating device, the components of lower density may be dosed/dispensed and/or aspirated, or other liquids may be aspirated into the tubular container.

Typical volumes that are handled and manipulated by the device according to the present invention are in the sub-milliliter range, such as 10 µl - 900 µl, e. g. approximately 50µl, 100 µl, 150 µl, 200 µl, 250 µl, (300 µl, 350 µl, 400 µl, 450 µl, 500 µl, 550 µl, 600 µl, 650 µl, 700 µl, 750 µl, 800 µl, 850 µl, 900 µl) and any volumes in between. However, larger volumes may also be envisaged, depending on the sample and the sample type. In one embodiment, the capillary tube has a volume in the range of from 10 - 400µl, preferably 20 - 400µl, preferably 50 - 300µl.

It should also be noted that in accordance with the present invention, the tubular container, prior to receiving a liquid sample, is not evacuated, e.g. of air. In one embodiment, the tubular container is internally coated with one or several suitable agents for processing the liquid sample. Again, many such agents can be envisaged. If the liquid sample is blood, they may be coagulation inhibitors, such as EDTA, citrate, ammonium heparinate, etc. The device may, in some embodiments, comprise additionally some form of identification, e.g. in the form of a label, a tag, a bar code, a magnetic strip, etc., by which information on the sample may be stored and/or represented.

It should also be noted that a dispensing and/or aspirating device does not form an integral part of the device for collecting and/or handling a liquid sample. However, it may be connected thereto and in particular to the tubular container of the device for collecting and/or handling through the interface of the device. If a dispensing and/or aspirating device is connected to the tubular container through the interface, it forms a fluid connection between the dispensing and/or aspirating device and the tubular container.

The present invention also relates to an insert (9, 9', 9") for a centrifuge, which comprises a receptacle (9.1, 9.1', 9.1") for a device for collecting and/or handling a liquid sample in accordance with the present invention. The receptacle encompasses a volume (9.1.1, 9.1.1', 9.1.1") for receiving the device and allows the positioning of the device in a centrifugal direction. The receptacle has an exterior end (9.1.2, 9.2.2', 9.1.2") and an interior end (9.1.3, 9.2.3', 9.1.3") and is configured such that, during centrifugation, any centrifugal force exerted acts towards the exterior end of the receptacle. The insert furthermore comprises a stop (9.1.4, 9.2.1', 9.1.4") located at the exterior end of the receptacle against which, during centrifugation, a device (1, 1', 1") according to the present invention, i.e. a device for collecting and/or handling a liquid sample, is pressed. The stop is configured to establish a contact to the valve (4, 4.1', 4", 4.1") located in the tubular container of the device, such valve being actuated by centrifugal force. In one embodiment, the stop is a pin, a tappet, a stamp, a pillar, a groove with a back wall, a pestal, an elevation from the exterior end, or a wall of the receptacle at the exterior end of the insert. The purpose of the stop, e.g. the groove, is to allow a relative movement of the valve in relation to the tubular container, whereby, by such relative movement, the compartment for receiving a component with high(er) density of the liquid sample becomes defined and closed from the remainder of the tubular container.

The present invention also relates to a centrifuge (10, 10', 10") comprising such insert. Furthermore, the present invention relates to a method of separating a liquid sample into components having different densities wherein the method comprises the steps:
Using the device (1, 1', 1") according to the present invention for receiving a liquid sample therein in the tubular container (2, 2', 2"). In one embodiment, this typically is achieved by employing a capillary tube (7, 7', 7") that is a part of the device into which the liquid sample, i.e. blood, is taken up by capillary action;
Separating at least one sample component of a defined density, typically a higher density than other components, from the remaining part of the liquid sample or from other components thereof into the compartment (5, 5', 5a", 5b") of the device, by centrifugation of the device, preferably at a first centrifugation speed;
Closing and sealing the compartment (5, 5', 5b") by centrifugation, preferably at a second centrifugation speed, which is preferably higher than the first centrifugation speed. In this step, the valve acts to close and seal the compartment into which the component of a defined density has been separated;
Stopping the centrifugation and, optionally, manipulating the separated at least one sample component of a defined, i.e. higher, density or the remaining part of the sample or said other component(s) (of a lower density or of lower densities) by adding thereto or withdrawing therefrom one of several defined volumes of liquids by means of a dispensing and/or aspirating device (8, 8', 8") which is temporarily connected to the device according to the present invention via the interface (6, 6', 6") for establishing a contact between the two devices.

The invention is now further described by reference to a prototype ("Prototype A") which, however, is not intended to limit the invention:

### Prototype A

In one embodiment, the present invention provides a device (1, 1', 1") for collecting and/or handling a liquid sample and for separating such sample into different components having different densities, wherein such device (1') is an assembled device. Such assembled device (1.1') comprises a device for fractionating a liquid sample as a first component (a) and a device (1.2') for obtaining a liquid sample as a second component (b). Both these devices may be assembled together to form an embodiment of a prototype of the device according to the present invention. Such assembled device is herein also sometimes referred to as an "assembly device" (1').

### a) Component (a) = device for fractionating a liquid into components having different densities (1.1')

An example of a device for fractionating a liquid into components having different densities comprises an open-ended cylindrical vessel (2') having an upper part (3.2') and a lower part (3.1') which vessel is configured to accommodate a capillary tube (7') in its lower part (3.1') and a piston (4.1') slidably inserted in the upper part (3.2') of the cylindrical vessel. To this end, the lower part of the cylindrical vessel includes a first tubular channel (2.1') configured to receive a capillary tube (7'). The upper part (3.2') includes a second tubular channel (2.2') configured to receive a piston (4.1'). The second tubular channel contains a space (5') for receiving a liquid or a fraction of said liquid. Such space is variable and depends on the position (4.1') of the piston within the second tubular channel (2.2'). The first (2.1') and the second (2.2') tubular channel are in fluid connection with each other at an interface between them, and the second tubular channel has a diameter which is larger than a diameter, preferably the diameter, of the first tubular channel. The interface represents the transition between the first tubular channel and the second tubular channel. Such interface may take different forms. For example it may be such that the second tubular channel has a single diameter throughout its entire length, such that at the interface between the first and second tubular channel there is a stepwise reduction in diameter from the second tubular channel to the first tubular channel. In another embodiment, the second tubular channel has a single diameter over 90%, preferably 95%, more preferably 98% or more of its entire length, and then, towards the interface to said first tubular channel, the diameter gradually narrows down to the diameter of the first tubular channel. This reduces or even avoids the occurrence of shearing forces when liquids are flowing through the first tubular channel and the second tubular channel or vice versa. This may be of particular importance, if in the liquid to be fractionated, there are cellular components, such as cells which should not be ruptured. For example in the case of blood, the rupturing of blood cells (hemolysis) caused by shearing forces should be avoided. In one embodiment, the first and/or second tubular channel have cross-sections which are rectangular, square circular or oval. In a preferred embodiment, the cross sections of both the first and the second tubular channel are circular.

The open-ended cylindrical vessel (2') further includes at its upper end (3.2.1') a piston (4.1') slidably inserted in the second tubular channel (2.2') which forms a sliding fit with the inner wall of the second tubular channel (2.2'), thus allowing a movement of the piston within said second tubular channel. The sliding fit of the piston with the inner wall of the second tubular channel is preferably a liquid-sealing fit, thus ensuring that liquid contained in said second tubular channel in said space for receiving a liquid, will not squeeze past such piston. In one embodiment, such sealing fit is achieved by a seal, which may be a suitable layer which forms part of the piston on the outside of said piston, or it may be an O-ring, such as a rubber ring, effectively providing a seal. The piston has (4.1') an open upper portion (4.1.3') and a closed lower portion (4.1.2') and conically narrows towards its lower portion. The piston fulfills the function of providing means to move liquid or a fraction thereof within the second and/or first tubular channel. For example, after a separation into a liquid fraction and a solid fraction has occurred in the second tubular channel, e. g. by way of centrifugation, the liquid fraction may be pressed out of the second tubular channel into the first tubular channel by movement of the piston. The piston also further serves the function of determining the volume of the space for receiving a liquid or fraction thereof. This volume is simply dependent on the position of the piston within the second tubular channel. Typical volumes that are handled and manipulated by the device according to the present invention are in the sub-milliliter range, such as 10 µl - 900 µl, e. g. approximately 50µl, 100 µl, 150 µl, 200 µl, 250 µl, (300 µl, 350 µl, 400 µl, 450 µl, 500 µl, 550 µl, 600 µl, 650 µl, 700 µl, 750 µl, 800 µl, 850 µl, 900 µl) and any volumes in between. However, larger volumes may also be envisaged, depending on the sample type. In one embodiment, the volume of said space for receiving a liquid or fraction thereof is identical to the volume of a capillary that is to be used in conjunction with the device for fractionating a liquid into components with different densities. Such capillary preferably has a volume in the range of from 20 µl - 400 µl, preferably 50 µl - 300 µl.

The piston (4.1') has an open upper portion (4.1.3') and a closed lower portion (4.1.2') and, at its upper portion, a collar (4.1.4') which is dimensioned such that upon movement of said piston into the second tubular channel, the collar eventually abuts on the wall of the open-ended cylindrical vessel at its upper end. Thus, further movement of the piston into the second tubular channel is stopped. Moreover, the piston is dimensioned such that, when said collar abuts on the wall at the upper end of the cylindrical vessel, the lower portion (4.1.2') of the piston closes and seals the interface between the first and second tubular channel. As a result thereof there is no longer a fluid connection between the channels. By this mechanism, it is possible to separate different fractions, for example a solid fraction and a liquid fraction between different compartments. For example, a solid fraction may remain in the space defined by the second tubular channel in the cylindrical vessel and by the lower portion of the piston which is conically narrowed. In such void space, the solid fraction may be located and separated from the liquid fraction which may be in the first tubular channel (2.1') or any capillary tube (7') located in such tubular channel. Such separation is possible, because the piston is dimensioned such that when the collar abuts on the wall at the upper end of the cylindrical vessel, the lower portion of the piston closes and seals the interface between the first and second tubular channel such that there is no longer a fluid connection between these channels. By choosing appropriate dimension of the piston and, in particular, its lower portion, the volume of the space for receiving a liquid of fraction within the second tubular channel can be easily defined.

The piston further includes an interior space (4.1.5') in which a mandrel (4.1.6') is slidably inserted so as to form a sliding fit with the inner wall of the interior space of said piston. The interior space (4.1.5') of said piston has a diameter that decreases from the open upper portion towards the closed lower portion. The mandrel (4.1.6') has a tip (4.1.6.1') at one end and a head (4.1.6.2') at the opposite end, with the head being dimensioned such that upon movement of the mandrel in the interior space towards the lower portion of the piston, the head abuts on the inner wall of the interior space and stops further movement of said mandrel into said interior space (4.1.5') of the piston (4.1'). Furthermore, the mandrel is dimensioned such that when the heads stops further movement of the mandrel into said interior space, the tip of the mandrel abuts on the closed lower portion (4.1.2') of the piston and, optionally, pierces through that closed lower portion. If the tip pierces through the closed lower portion, this will establish a fluid connection from the interior space of said piston to the first tubular channel or any capillary located therein. Typical examples of the shape of the mandrel may be a nail, or a pin, or any other elongated form, as long as it has a head and a tip. The head has a larger diameter than the tip. In one embodiment, the mandrel is hollow and has a channel (4.1.6.3') running through its length, or it can be pierced through by a needle, for example by a syringe so as to create a fluid connection to the first tubular channel within said cylindrical vessel through the piston and mandrel from the upper end.

In a preferred embodiment, the second tubular channel (2.2'), at the end where it connects to the first tubular channel (2.1'), conically narrows towards the first tubular channel, preferably in a gradual manner. The angle of such conus influences the space that is available for receiving a liquid of fraction within the second tubular channel. In a preferred embodiment, the cylindrical vessel, the piston and the mandrel are each made from a material or combination of materials which are independently selected from plastics, in particular polystyrene (PS), polyethylene (PE), polypropylene (PP), polyether ether ketone (PEEK).

The device may, in some embodiments, comprise additionally some form of identification, e. g. in the form of a label, a tag, a bar code, a magnetic strip etc., by which information on the sample may be stored and/or represented. The device for fractionating a liquid into components having different densities in accordance with the present invention is configured to receive a capillary tube (7') in its first tubular channel. Such capillary tube may be provided on its own or as part of a further device.

### Prototype A

The prototype A further comprises a component (b):

### b) Component (b) = device for obtaining a liquid (1.2')

Accordingly, in a further aspect, the present invention also relates to a device (1.2') for obtaining a liquid from a volume of liquid or from a biological tissue which comprises a capillary tube (7') having an upper part (7.2') and a lower part (7.1'), and a cylindrical body (7.3') having an upper end (7.3.2') and lower end (7.3.1'), the lower part (7.1') of the capillary tube being included in said cylindrical body (7.3') and being fixed therein. The cylindrical body provides stability for the capillary tube and may act as a handle or grip for handling the capillary tube. The cylindrical body at its lower end (7.3.1'), has a hollow tip protruding from such lower end. By virtue of such hollow tip, it is possible to uptake a liquid sample from a tissue, for example a drop of blood from a fingertip or an earlobe. The upper part (7.2') of the capillary tube (7') protrudes from the cylindrical body (7.3') at the upper end of the cylindrical body, and the lower part (7.1') of the capillary tube (7') is included in the cylindrical body (7.3') and is fixed therein in such a manner that the hollow tip and the capillary tube are in fluid connection with each other. Thus, if the hollow tip is brought in contact with a liquid, such liquid may flow into the capillary tube. The capillary tube and the hollow tip are, effectively aligned. The capillary tube has a diameter and length that match the corresponding parameters of the first tubular channel in the lower part of the cylindrical vessel described above. The capillary tube is open-ended at both its upper end and its lower end. It may be coated, preferably on its inside, with a suitable reagent material, such as a coagulation inhibitor or a buffer salt. Examples of suitable agents to be used for such coating are EDTA, citrate, ammonium heparinate, etc.

In a preferred embodiment, the cylindrical body (7.3') is made of plastics or ceramics or metal or metals or metal alloys or combinations of the foregoing. In one embodiment, the capillary tube (7') is made of plastics or glass, preferably transparent plastics or glass.

Preferably, the device for obtaining a liquid is used such that its capillary tube (7') is inserted into a volume of liquid or the tube is used to collect a sample from the patient. By capillary forces, the respective liquid is taken up in the capillary tube until this is filled. The take-up stops when the hollow end is reached which serves a capillary stop. The diameters of the hollow tip and of the capillary tube are matched such, that the hollow tip provides for a capillary stop.. In one embodiment, the diameter of the capillary tube is in the range of from 1 to 5 mm. In one embodiment, the diameter of the hollow tip is in a range of from 0.2 to 1 mm. In one embodiment, the volume of the capillary tube is in the range of from 10 to 250 µl.

Once the capillary tube is filled with the liquid, it may be inserted into the device for fractionating a liquid into components thus effectively forming a combination of the two aforementioned devices.

### Prototype A

When the two components (a) (1.1') and (b) (1.2') are assembled together, they form an assembly device (1') (c):

### Assembly device (c) = assembly of (a) + (b) (see above)

Accordingly, in a further aspect, the present invention also relates to such combination, namely to an assembly device (1') for obtaining and fractionating a liquid into components having different densities wherein such assembly device comprises a device (1.1') for fractionating a liquid as defined above, and a device (1.2') for obtaining a liquid from a volume of liquid or from a biological tissue, as defined above. These two devices are assembled in the assembly device such that the upper part (7.2') of the capillary tube (7') which protrudes from the cylindrical body (7.3') at the upper end (7.3.2') thereof is included/inserted in the first tubular channel (2.1') of the cylindrical vessel (2'), wherein the external diameter of the capillary tube matches the internal diameter of the first tubular channel (2.1') such that the outside of the upper part of the capillary tube is, preferably, in contact with the inner wall of the first tubular channel and such that a sliding movement of said capillary tube in the first tubular channel is possible, thus allowing the insertion of the device (1.2') for obtaining a liquid into the device (1.1') for fractionating a liquid. In one embodiment, the contact between the outside of the upper part of the capillary tube with the inner wall of the first tubular channel should be such that an insertion of the capillary tube into the first tubular channel is easily possible without the risk of any rupture or breakage of the capillary tube. In one embodiment, at the interface between the first and second tubular channel there is a protrusion. This protrusion effectively prevents the capillary tube from moving into the second tubular channel. In one embodiment, the length of the capillary tube protruding from the cylindrical body at the upper end of the cylindrical body matches the length of the first tubular channel in the device for fractionating. In this embodiment, when the device for obtaining a liquid has been inserted into the device for fractionating a liquid, the cylindrical body (7.3') at its upper end contacts the lower part (3.1') of the cylindrical vessel (2') of the device (1.1') for fractionating. In one embodiment, the upper end (7.3.2') of the cylindrical body (7.3') may comprise a collar (7.3.3') facilitating the contact towards the lower part (3.1') of the cylindrical vessel. In some embodiments, such collar may have dimensions matching the dimension of the lower part of the cylindrical vessel. For example, the respective diameters may be the same or substantially the same.

The assembly device also has an interface (6, 6') to a dispensing and/or aspirating device (8, 8') e. g. a pipette. This interface allows establishing a connection preferably a fluid connection, between the cylindrical vessel and the dispensing and/or aspirating device, and by such connection, if made the dispensing and aspirating device may dispense liquid(s) from the cylindrical vessel or aspirate liquids into the cylindrical vessel. Is should be noted, however, that a dispensing and/or aspirating device does not form an integral part of the assembly device. It may be connected thereto and in particular to the cylindrical vessel of the assembly device through the interface. If a dispensing and/or aspirating device is connected to the cylindrical vessel through the interface, it forms a fluid connection to the cylindrical vessel.

Once the assembly has been made, including a liquid in said capillary tube (but without a dispensing and/or aspirating device), the liquid is to be separated into its various components having different densities by way of centrifugation. For this purpose, the assembly device is put into an insert (9') for a centrifuge.

### Prototype A

### d) Centrifuge insert for Prototype A

In a further aspect, the present invention also relates to an insert (9') for a centrifuge, such insert being adapted to receive an assembly device (1') for obtaining and fractionating a liquid into components having different densities in accordance with prototype A of the present invention. Such insert for a centrifuge comprises guide means (9.2') having a pin (9.2.1') located at an exterior end (9.2.2') of said guide means (9.2') and at least one receptacle (9.1') for an assembly device (1') according to the present invention. The receptacle encompasses a volume (9.1') for receiving said device and allows the positioning of said device in a centrifugal direction in the centrifuge. The receptacle (9.1') is slidably mounted on the guide means (9.2') such that during centrifugation the receptacle ((9.1') is pushed and, optionally, moved in a centrifugal direction along the guide means (9.2') towards the pin (9.2.1'). In a preferred embodiment, the longitudinal axis of the pin is aligned with the longitudinal axis of the guide means and the longitudinal axis of the receptacle. Effectively, therefore, the longitudinal axis of the pin is also aligned with the longitudinal axis of the assembly device in accordance with the present invention. The distance moved by the receptacle along the guide means towards said pin is determined by the speed of centrifugation. If no centrifugation takes place, said receptacle is located and held at a first distance from said pin by the action of a withholding mechanism. Such withholding mechanism may e.g. be a spring with a defined spring force. Such first distance is preferably the maximum distance at which the receptacle is held apart from the pin. In one embodiment, the withholding mechanism is configured such that, when a defined threshold of centrifugation speed is exceeded, the receptacle is no longer held at such first distance from the pin and moves towards the pin such that in the further course of centrifugation, the pin enters the volume for receiving the assembly device. Accordingly, if in the volume for receiving the device, an assembly device is present, the pin effectively enters the assembly device, namely such that in one embodiment, it is inserted into the interior space of the piston. In one embodiment, therefore, the insert further comprises the assembly device which is located in the receptacle. When the defined threshold of centrifugation speed is exceeded, the receptacle moves towards the pin such that the pin enters into the interior space of the piston and touches the mandrel which is moved to the lower portion of the piston until its head stops further movement of said mandrel, and said piston moves into said second tubular channel towards the interface between the first and second tubular channel until the lower portion of the piston closes and seals such interface. Once the mandrel and the piston have been moved in such a position, they remain there, because they are preferably locked in such position, even if centrifugation subsequently stops and even if the receptacle (and the device) move away from the pin. The insert according to the present invention is to be used in conjunction with a centrifuge (10') into which it is inserted. In a preferred embodiment, such insert comprises a base plate (9.3'), e. g. a circular base plate, on which the other components, i.e. the guide means, the receptacle and the pin are mounted. In one embodiment, therefore, the pin is at the exterior end of said guide means. Hence, in the embodiment, where there is a base plate, such pin is preferably located at the periphery of such base plate. In a further aspect, the present invention also relates to a centrifuge (10') which comprises the insert according to the present invention.

Such centrifuge (10') is to be used in a method of obtaining a liquid and fractionating it into components with different densities, wherein the method preferably comprises the steps:
Using the device (1.2') according to b) of Prototype A (see above) for receiving a liquid in a capillary tube by either inserting the hollow tip into a volume of liquid and allowing the liquid to enter the tip and, subsequently, the capillary tube by capillary forces. The device which has been liquid filled in this manner is then used for assembling the assembly device (1') according to c) of Prototype A (see above) of the present invention by inserting the upper part (7.2') of the liquid filled capillary tube into the first tubular channel (2.1') of the device (1.1') for fractionating a liquid (a) of Prototype A) thus effectively producing a liquid filled assembly device (1') according to the present invention (c) of Prototype A). Such liquid filled assembly device is subsequently placed in a centrifuge insert (9') according to the present invention, and such insert is mounted into a centrifuge (10').

With respect to centrifugation, in one embodiment, the assembly device is centrifuged at a first centrifuge speed range which allows a spatial separation of the different components of said liquid according to their densities, such that said liquid and said separated components become all located in the space for receiving a liquid in the second tubular channel. In one embodiment, then the centrifuge speed is increased beyond a defined threshold of centrifugation speed, and the assembly device is centrifuged at a second centrifuge speed range which is in excess of such threshold. Because beyond such threshold, the assembly device moves towards the pin located at an exterior end of the guide means, said pin enters into the interior space of the piston and allows the piston to push the liquid component(s) back into the upper part of the capillary tube whilst the liquid that has already occupied the space for receiving a liquid (and that may contain the more dense components, such as solids, e. g. cells, is retained in the space for receiving a liquid. In one embodiment, this also allows the piston to seal the capillary tube from the space for receiving a liquid and thus effectively isolates the liquid component(s) from the solid component(s). In one embodiment, a piercing by the mandrel of the closed lower portion of the piston is done after centrifugation, i.e. when centrifugation has stopped. This will provide access to the liquid component(s) located in the capillary tube. Such access can be achieved through the interface (6') to a dispensing and/or aspirating device (8'), which may be connected through such interface to the cylindrical vessel (2') of the assembly device (1').

The device(s) according to all types, prototypes, examples and embodiments of the present invention allow for an obtainment of a sample in a direct, easy and uncomplicated manner. In accordance with the present invention, the device(s) according to the present invention may also be considered a closed device, and this will reduce the danger of any contamination or infection. This is of a particular importance, when body fluids, such as blood or lymph are handled. In a further embodiment, the device(s) may be appropriately labeled. Such label can be in various forms, for example in the form of a tag, a sleeve, a collar or a sticker that becomes attached to any of the devices on the outside. The device(s) in accordance with the present invention may itself be used for portioning purposes, in the sense that the separated components can be further dosed and dispensed in partial volumes. This may be achieved by attaching the device to a pipette or a robot that includes a pipetting unit in a manner similar to a conventional pipette tip. In the devices according to the present invention, the separation of the cellular components occurs directly within the device, and such mechanical separation by a physical reduces the risk of contamination of the liquid components, such as plasma or serum.

It should be noted that the terms "upper" and "lower", as used herein, do not necessarily refer to a preferred location with respect to gravity and the earth surface as a reference system. Rather, such terms are used only in the sense to differentiate one end/part/portion from another end/part/portion located opposite thereof.

The invention is now further described by reference to another related prototype, Prototype B, which, however, again is not intended to limit the invention:

### Prototype B:

In a further aspect, the objects of the present invention are also solved by a separating device (1") for separating a liquid sample into sample components having different densities, said separating device comprising a first space (5a") for receiving said liquid sample and at least one second space (5b") for accommodating a sample component of a defined density therein, said separating device further comprising means (4") for isolating said second space and sealing it.

In one embodiment, said means (4") for isolating and sealing said second space is a valve. In one embodiment such valve is actuated by centrifugal force(s).

In one embodiment, said separating device (1") comprises a tubular vessel (2") having an inner wall, and said means (4") for isolating and sealing said second space (5b") is a piston (4.1") having a front end(4.1.1") and a back end (4.1.2") and being slidably inserted in said tubular vessel (2") so as to form a sliding fit with the inner wall (2.1") of said tubular vessel, wherein said first space (5a") for receiving said liquid sample is within said tubular vessel (2") at the front end (4.1.1") of said piston and is defined by the inner wall of said tubular vessel, by said front end of said piston and by the position of said piston within said tubular vessel.

In one embodiment, said separating device (1") is configured to allow a separation into sample components having different densities by centrifugation, wherein said separation is achieved by centrifuging said separating device, and wherein, after centrifugation, said first space (5a") is for receiving a remaining part of said liquid sample from which at least one component of a defined density has been separated.

In one embodiment, the separating device according to the present invention further comprises a capillary tube (7") positioned to communicate with said first space (5a") or to be part of said first space.

In one embodiment, said second space (5b") is a subspace of said first space (5a"), being located in said first space.

In another embodiment, said second space (5b") is not part of said first space (5a") and is located separate and distanced from said first space.

When said second space (5b") is a subspace of said first space and is located in said first space, said separating device comprises a tubular vessel (2") having an inner wall (2.1"), and said means (4") for isolating and sealing said second space is a piston (4.1") having a front end (4.1.1") and a back end and (4.1.2") being slidably inserted in said tubular vessel so as to form a sliding fit with the inner wall of said tubular vessel, and wherein said second space (5b") for accommodating a sample component of a defined density therein is within said tubular vessel (2") at the front end (4.1.1") of said piston and is defined by the inner wall (2.1")of said tubular vessel(2"), by said front end (4.1.1") of said piston and by the position of said piston within said tubular vessel.

When the second space (5b") is a subspace of said first space (5a") and is located therein, said piston preferably has a tapering front end configured to confine and seal said second space.

When the second space (5b") is not part of said first space (5a") and is located separate and distanced therefrom, said separating device (1") comprises a tubular vessel (2") having an inner wall (2.1"), and said means (4") for isolating and sealing said second space (5b") is a piston (4.1") having a front end (4.1.1") and a back end (4.1.2") and being slidably inserted in said tubular vessel (2") so as to form a sliding fit with the inner wall (2.1") of said tubular vessel, wherein said first space (5a") for receiving said liquid sample is within said tubular vessel (2")at the front end of said piston (4.1.1") and is defined by the inner wall (2.1") of said tubular vessel, by said front end (4.1.1") of said piston and by the position of said piston within said tubular vessel, wherein said second space (5b") for accommodating a sample component of a defined density therein is a cavity in a wall (2.1") of said tubular vessel, or said device (1") further comprises a sleeve or collar (2.2") around said tubular vessel (2") and said second space (5b") is a cavity (2.2.1") in said sleeve which cavity (2.2.1") is accessible via a hole (2.1.1") in said wall (2.1") of said tubular vessel, wherein said hole (2.1.1") is aligned with said cavity(2.2.1").

In such an embodiment, where the second space (5b") is located separate from said first space, it is preferred that opposite said cavity (2.2.1") and said hole (2.1.1") aligned with the cavity (2.2.1"), there is a through opening (2.1.2") in said wall (2.1") of said tubular vessel suitable to function as a vent, wherein said piston (4.1") slidably inserted in said tubular vessel has a channel (4.1.2") inside with one opening (4.2.1.1") at the front end of said piston and a second opening (4.2.1.2") at a side of said piston, and said second opening is configured such that it can be brought in fluid connection with either said cavity (2.2.1") or said through opening (2.1.2") in said wall, depending on the piston's position within said tubular vessel, such that the channel (4.2.1") inside said piston establishes a fluid connection from the front end (4.1.1") of said piston to either said through opening (2.1.2") or to said cavity (2.2.1").

In one embodiment, said through opening (2.1.2") is an elongated slit along the wall (2.1") of said tubular vessel, wherein said slit has a length extending beyond said back end (4.1.2") of said piston, and wherein, if the channel (4.2.1 ") inside said piston establishes a connection from the front end (4.1.1") of said piston to said through opening (2.1.2"), a fluid connection is established from the front end (4.1.1") of said piston to a space behind said back end (4.1.2") of said piston.

In one embodiment, the separating device (1") according to the present invention further comprises an interface (6") for establishing a connection to a dispensing and/or aspirating device (8"), such dispensing and/or aspirating device, when connected to said device (1"), allowing for the controlled and dosed aspiration or ejection of a defined volume of liquid or gas from the separating device.

Also for this prototype B, the present invention provides for an insert (9") for a centrifuge comprising:
- a receptacle (9.1") for a separating device according to the present invention, as defined above as Prototype B, said receptacle encompassing a volume (9.1.1") for receiving said separating device and allowing the position of said separating device in a centrifugal direction, said receptacle having an exterior end(9.1.2") and an interior end (9.1.3") and being configured such that, during centrifugation, any centrifugal force acts towards the exterior end of said receptacle;
- a stop (9.1.4") located at said exterior end (9.1.2") of said receptacle against which, during centrifugation, said separating device according to the present invention, is pressed, said stop being dimensioned to establish a contact to said means (4") for isolating and sealing said second space of said separating device.

In one embodiment, said stop (9.1.4") is a pin, a tappet, a stamp, a pillar, a groove with a back wall, a pestle, an elevation from the exterior end, or a wall of said receptacle at said exterior end.

The objects of the invention are also solved by a centrifuge (10") comprising the insert according to the present invention, as defined above.

The objects of the invention are furthermore solved by a method of separating a liquid sample into components, said method comprising the steps:
- using the separating device (1") as defined above (as Prototype B) for receiving a liquid sample therein in said first space (5a"),
- separating at least one sample component of a defined density from the remaining part of said liquid sample or from other components thereof into said second space (5b") by centrifugation, preferably at a first centrifugation speed,
- isolating and sealing said second space by centrifugation, preferably at a second centrifugation speed, wherein such second centrifugation speed is preferably higher than said first centrifugation speed,
- stopping the centrifugation and, optionally, manipulating said separated at least one sample component of a defined density or the remaining part of the sample or said other component(s) thereof by adding thereto or withdrawing therefrom defined volumes of liquids by means of a dispensing and/or aspirating device (8") temporarily connected to said separating device via an interface (6").

### SHORT DESCRIPTION OF DRAWINGS

The invention is now described with reference to the attached drawings, wherein
- Figure 1: shows a side view of part of a device (1.2') for obtaining a liquid sample in accordance with exemplary prototype A (component b) of Prototype A).
- Figure 2: shows a section of an embodiment of a device (1, 1') for collecting and/or handling a liquid sample in accordance with prototype A of the present invention (components a) (1.1') and b) (1.2') of Prototype A assembled (1, 1')).
- Figure 3a: shows a side view of an embodiment of a device (1, 1') for collecting and/or handling a liquid sample in accordance with prototype A of the present invention, including an outside label attached thereto.
- Figure 3b: shows a sectional view of an embodiment of a device (1, 1') for collecting and/or handling a liquid sample according to exemplary prototype A of the present invention, wherein the device is shown in two parts that are to be joined (components a) (1.1') and b (1.2'))).

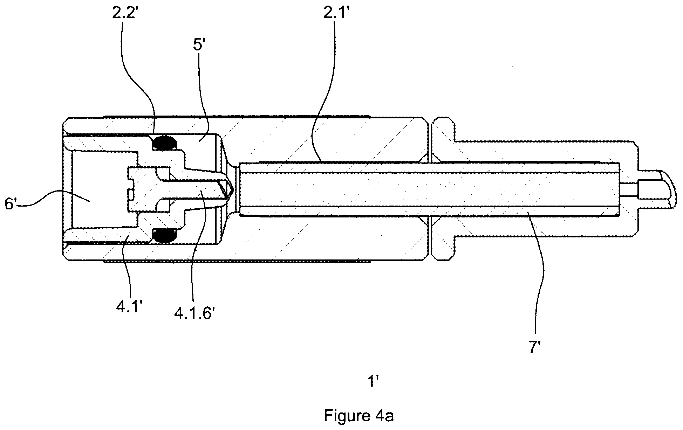

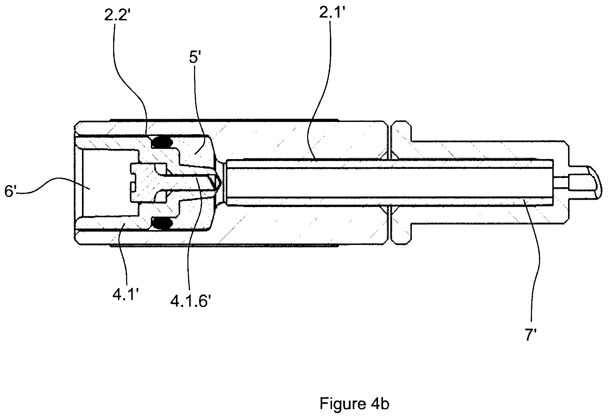

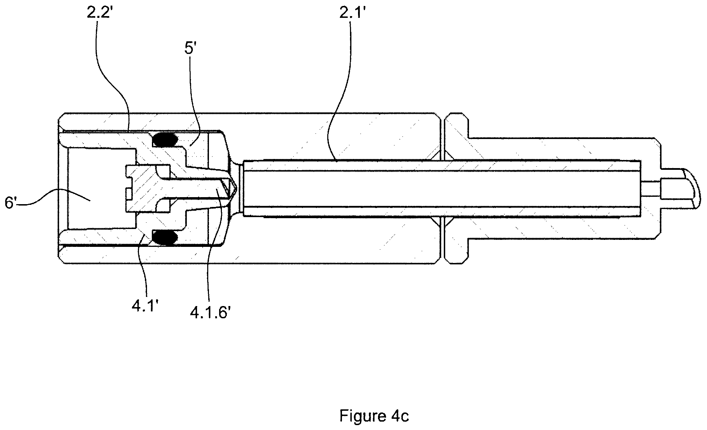

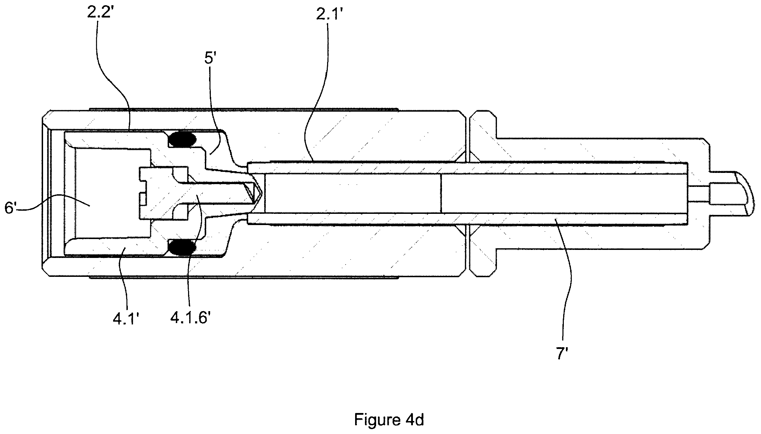

- Figure 4a-d: show sections of an embodiment of a device (1, 1') for collecting and/or handling a liquid sample according to exemplary prototype A of the present invention, which undergoes centrifugation: Figure 4a, the sample is in the capillary tube (7, 7'); Figure 4b, by exertion of centrifugal force, the sample leaves the capillary tube and enters the tubular container (2,2'); Figure 4c, during the further course of centrifugation, the sample becomes separated in the tubular container into a component of a higher density and a component of a lower density; Figure 4d, by further centrifugation, the component of a higher density becomes separated within a compartment, and the component of a lower density is separated therefrom; the valve (4, 4.1') seals the compartment.
- Figure 5: shows an explosion view of an embodiment of the device (1, 1') for collecting and/or handling a liquid sample in accordance with exemplary prototype A according to the present invention which includes a cylindrical vessel (2,2'), a piston (4, 4.1') and a mandrel (4.1.6'), a capillary tube (7, 7') and a cylindrical body (7.3') having a hollow tip. It additionally also includes an O-ring and a label in the form of a sleeve.
- Figure 6: shows an embodiment of a centrifuge insert (9, 9') according to the present invention including two devices of exemplary prototype A of the present invention located therein.
- Figure 7a-b: show a sectional view of an embodiment of the insert (9, 9') including one device for collecting and/or handling a liquid sample according to exemplary prototype A of the present invention at two stages of centrifugation.
- Figure 8a-d: show four exemplary side-, top-, and bottom-views of a device (1, 1") for collecting and/or handling a liquid sample in accordance with exemplary prototype B of the present invention.
- Figure 9: shows three components of the device (1, 1") shown in Figure 8, from which components the device according to Figure 8 is assembled.
- Figure 10: shows two side and sectional views of an embodiment of a device (1, 1") according to Figure 8. In each panel A and B, the side view is shown on the left, and the sectional view is shown on the right, with the section being along the line shown in the side view panel.
- Figure 11: shows a sectional view of an embodiment of a device (1, 1") for collecting and/or handling a liquid sample in accordance with exemplary prototype B of the present invention at the stage where the sample is received prior to centrifugation.
- Figure 12: shows an embodiment of the same device (1, 1") as shown in Figure 11, wherein the device is placed into a centrifuge insert (centrifuge insert not shown). The left panel is prior to insertion into the centrifuge insert; the right panel is after insertion into the centrifuge insert.
- Figure 13: shows a sectional view of an embodiment of the device (1, 1") of Figures 8 ff. according to prototype B of the present invention. Arrows indicate the rotational direction of centrifugation and the direction of the centrifugal force. The crossed circle on the right represents the position of the centrifugation axis.
- Figure 14: shows a sectional view of the same device (1, 1") of Figure 13, when the rotational speed of the centrifuge has been increased beyond a defined threshold.
- Figure 15: shows a side view of the same device (1, 1") upon removal from the centrifuge receptacle.
- Figure 16: shows a sectional view of the same embodiment of the device (1, 1") according to Figures 8 ff. after centrifugation, when the device is connected at the left-hand side with a dispensing and/or aspirating device (8, 8") allowing a dispensing of liquid from the device for collecting and/or handling or allowing an aspiration of liquid into the device.

### DETAILED DESCRIPTION OF PREFERRED EMBODIMENTS

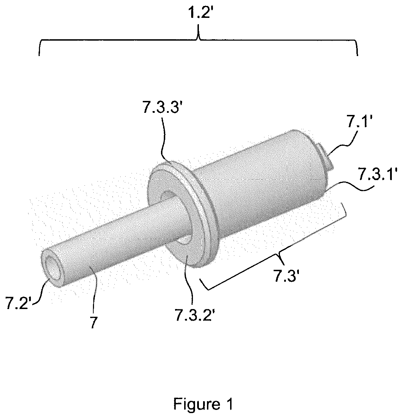

Figure 1 shows a schematic drawing of a side view of an embodiment of a device (1.2') for obtaining a liquid from a volume of liquid or from a biological tissue in accordance with component b) of Prototype A. A capillary tube (7') is included with its lower part (7.1') in a cylindrical body (7.3') and is fixed therein. At the lower end (7.3.1') of the cylindrical body, there is a hollow tip which can be used to be inserted into a volume of liquid or, in some embodiments, which can be used to prick a biological tissue. The hollow tip may be provided with a cutting edge for that purpose. It may also or alternatively be provided with a bevel, such as a bevel of 10-80 degrees. Such bevel allows for a greater suitability to be used in a pricking manner. Within the cylindrical body, the syringe and the hollow tip are aligned such that they are in fluid connection with each other, with the capillary tube (7') being open-ended at both its upper end (7.2') and its lower end (7.1'). The upper end protrudes from the cylindrical body, preferably with a length that is suitable to be inserted into a device (1.1') for fractionating a liquid in accordance with the present invention. The cylindrical body (7.3') serves as a grip or handle to facilitate the uptake of liquid. As shown in the figure, the upper end (7.3.2') of the cylindrical body has a collar (7.3.3') that is suited to contact the lower part (3.1') of a cylindrical vessel of a device (1.1') for fractionating a liquid. However, such a collar is not absolutely required, as long as contact between the cylindrical body and the cylindrical vessel can be made. The capillary can be glued into the cylindrical body or can be fixed by other suitable means. The hollow tip may be a piece manufactured separately from the cylindrical body which is subsequently attached thereto, or it may be an intrinsic part of the cylindrical body which is manufactured as a part thereof, for example by appropriate molding techniques.

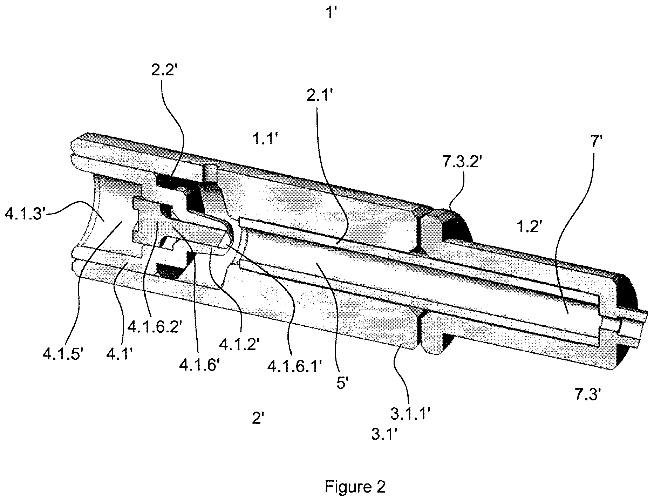

Figure 2 shows a sectional view of an embodiment of an assembly device (1') according to Prototype A of the present invention comprising both a device (1.1') for fractionating a liquid (component a) of Prototype A) according to the present invention and a device (1.2') for obtaining a liquid (component b) of Prototype A) according to the present invention. On the right hand side, one can see the cylindrical body (7.3') having a hollow tip which is aligned with a capillary tube (7') located with its lower part in the cylindrical body but protruding therefrom at the upper end (7.3.2') of the cylindrical body. The upper end of the cylindrical body makes contact with the lower end (3.1.1') of the cylindrical vessel (2') of a device (1.1') for fractionating a liquid into components shown on the left side of the figure. The lower part (3.1') of the cylindrical vessel (2') includes a first tubular channel (2.1') configured to receive a capillary tube (7') provided by the device (1.2') for obtaining a liquid. If necessary, the cylindrical body (7.3') and the cylindrical vessel (2') of the devices may be fixed with each other by appropriate means, such as a clip or other fixation means. The device (1.1') for fractionating a liquid shown on the left has a second tubular channel (2.2') which is in fluid connection with the first tubular channel (2.1') containing the upper part (7.2') of the capillary tube (7'). In the second tubular channel, a piston (4.1') is slidably inserted which itself has an open upper portion (4.1.3') and a closed lower portion (4.1.2'). At a position, where the piston has not been fully inserted into the second tubular channel (2.2'), there is a relatively large space (5') for receiving a liquid or fraction in said second tubular channel, the volume of such space depending on the position of the piston within the second tubular channel. The piston conically narrows towards its lower portion. Such conically narrowing may either occur gradually or stepwise, as required by the circumstances. The lower portion (4.1.2') of the piston is configured to close and seal the interface between the first and the second tubular channel such that there is no longer a fluid connection between the channels. Within the piston, in its interior space (4.1.5'), there is located a mandrel (4.1.6') which is slidably inserted so as to form a sliding fit with the inner wall of the interior space (4.1.5') of the piston. The interior space (4.1.5') of the piston has a diameter that decreases from the upper portion (4.1.3') of the piston towards the lower portion (4.1.2') of the piston. Again, such decrease in diameter may occur gradually or may occur in a stepwise fashion. The mandrel has a tip (4.1.6.1') at one end and a head (4.1.6.2') at the opposite end, and the head is dimensioned in such a manner that when the mandrel moves in the interior space of the piston towards the lower portion (4.1.2'), the head abuts on the inner wall of the interior space (4.1.5') and stops further movement of the mandrel into said interior space. When the head stops further movement of the mandrel into the interior space, the tip of the mandrel abuts on the closed lower portion of the piston and, optionally, pierces through such closed lower portion, thus establishing a fluid connection (again) from the interior space of the piston to the first tubular channel.

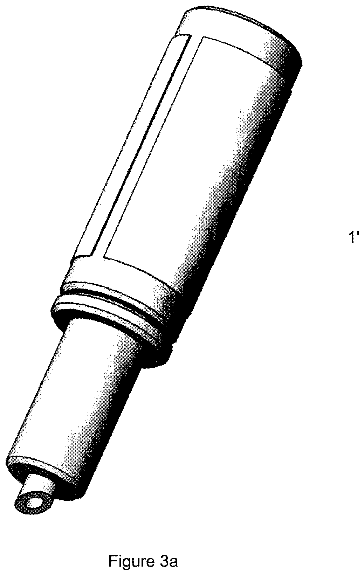

Figure 3a shows a side view of an embodiment of the assembly device (1') according to Prototype A of the present invention, which additionally has a label attached to the cylindrical vessel (2'). Such label may be used to identify the particular sample to be handled by this device. Alternative labels can also be envisaged, such as barcodes, QR codes, magnetic strips and other useful labels.

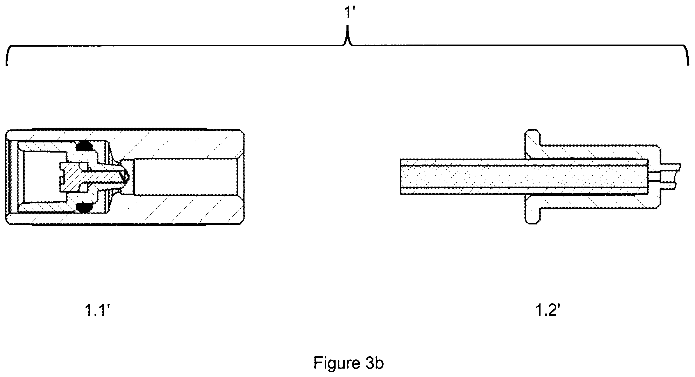

Figure 3b shows a sectional view of the assembly device (1') in two parts (1.1' and 1.2') that are to be joined.

Figures 4a-d show different stages of centrifugation to which an embodiment of an assembly device (1') according to Prototype A of the present invention is subjected: In Figure 4a, the assembly device (1') is assembled and includes in the capillary tube (7') a liquid, such as blood (shown by dots). The liquid is exclusively located only in the capillary. In Figure 4b, centrifugation is started after the assembly device (1') has been put into a centrifuge insert (9') in a centrifuge (10') (not shown), with the centrifugal axis being located to the right of the assembly device and the centrifugal force acting in the Figure towards the left. Also shown is the liquid-sealing fit of the piston (4.1') in the second tubular channel (2.2'), which, in this embodiment, is provided by an O-ring.

In Figure 4b, the centrifugation has started and the liquid is transported from the capillary (7') into the space (5') for receiving a liquid defined by the lower portion of the piston and the walls of the second tubular channel (2.2'). The air that was there previously has been pushed into the capillary.

In Figure 4c, the centrifugation is continued, and the different components are sorted and separated according to their density, with the most dense components being located further outside, away from the centrifugal axis (which is located on the right of the device), and the less dense components are located further to the right.

In Figure 4d, the centrifugal speed is increased beyond a specific threshold, as a result of which the assembly (1') device within the centrifuge insert (9') moves further to the outside and thus comes into contact with a pin (9.2.1') (not shown in the Figure, but being part of the centrifuge insert) that pushes the mandrel (4.1.6') and piston (4.1') inside the second tubular channel (2.2'). As a result of such pushing, the liquid component(s) are pushed back into the upper part (7.2') of the capillary tube whilst the more dense component(s), such as the blood cells in this example, are retained in the space (5') for receiving a liquid. The piston seals such space (5') from the capillary (7'), such that there is no longer a fluid connection between the second tubular channel (2.2') and the capillary (7'), and therefore, the solid components have been fully separated from the liquid components. In a preferred embodiment, the piston (4.1'), once it seals the interface between the two channels, it is locked in such position. The liquid may, for example, be plasma or serum that should be further manipulated. To this end, the mandrel (4.1.6') can be dimensioned such that during centrifugation, it abuts on the closed lower portion (4.1.2') of the piston and, optionally, pierces through such closed lower portion, as a result of which a fluid connection from the interior space of the piston (i.e. behind the mandrel) to the capillary tube is established.

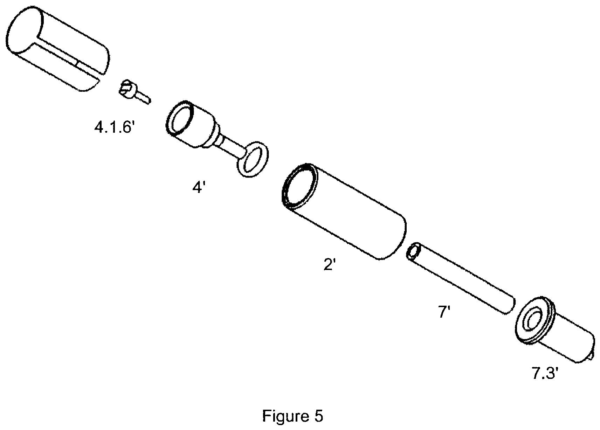

Figure 5 shows an explosion view of an embodiment of an assembly device (1') according to Prototype A of the present invention, including (from right to left) a cylindrical body (7.3') having a hollow tip, an open-ended capillary tube (7'), a cylindrical vessel (2'), an O-ring, a piston (4') to be inserted into the cylindrical vessel together with the O-ring, a mandrel (4.1.6') to be inserted into the interior space of the piston, and a label sleeve to be attached to the outside of the cylindrical vessel.

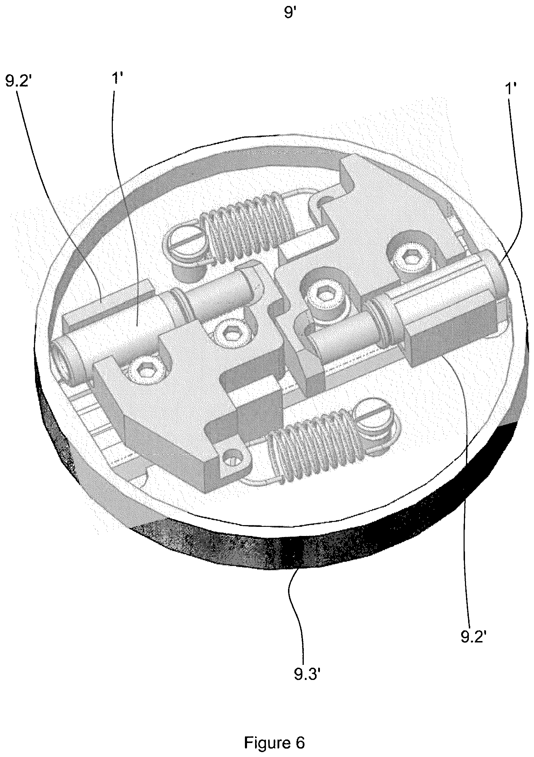

Figure 6 shows an embodiment of an insert (9') for a centrifuge in accordance with the present invention, including two assembly devices (1') located within said insert. There are two receptacles (9.1') for an assembly device according to the present invention and guide means (9.2') mounted on a base plate (9.3'). Also shown is a withholding mechanism in the form of two springs, which is configured such that when a defined centrifugation speed threshold is exceeded, the receptacle (9.1') is pushed along the guide means further to the outside under centrifugal force and moves towards a pin (9.2.1'). Due to the relative movement of the pin and the assembly device towards each other, the pin pushes the piston into the assembly device. The number of receptacles is not limited to per centrifuge insert. Other embodiments may have 10, 20, any numbers in between, or even more receptacles provided for.

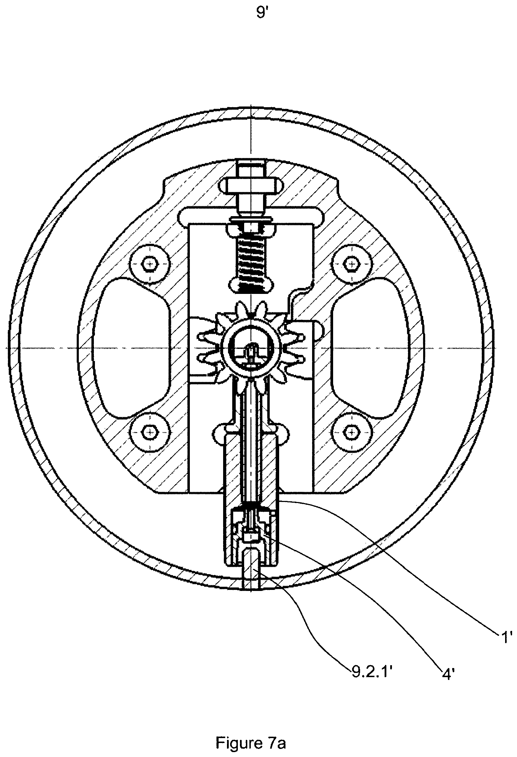

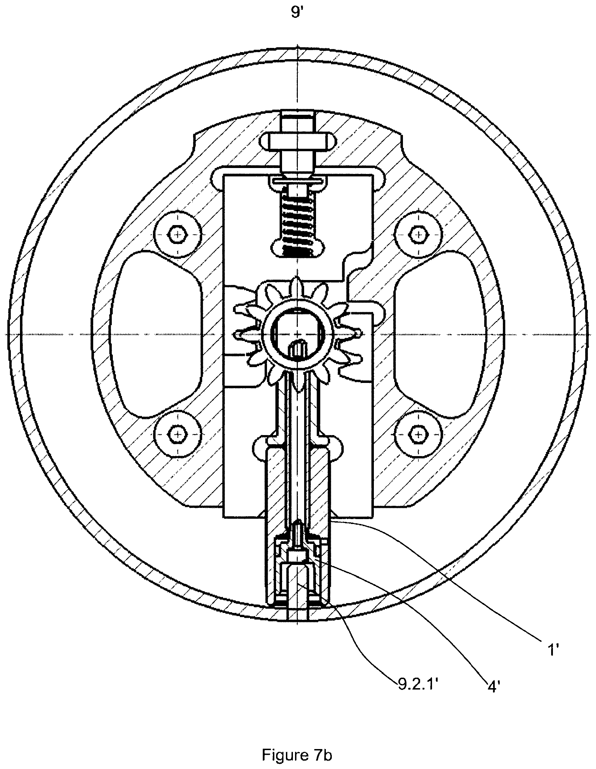

Figures 7a and b show another embodiment of an insert (9') according to the present invention with a cross-section being shown, including a pin (9.2.1') located at the outside of the insert and the guide means (9.2'), an assembly device (1'), a piston (4') that is pushed towards the pin when a defined centrifuge speed threshold has been exceeded. In Figure 7a, centrifugation is done at a speed below such threshold, and in Figure 7b, the threshold is exceeded, as a result of which pin and piston move relative towards each other.

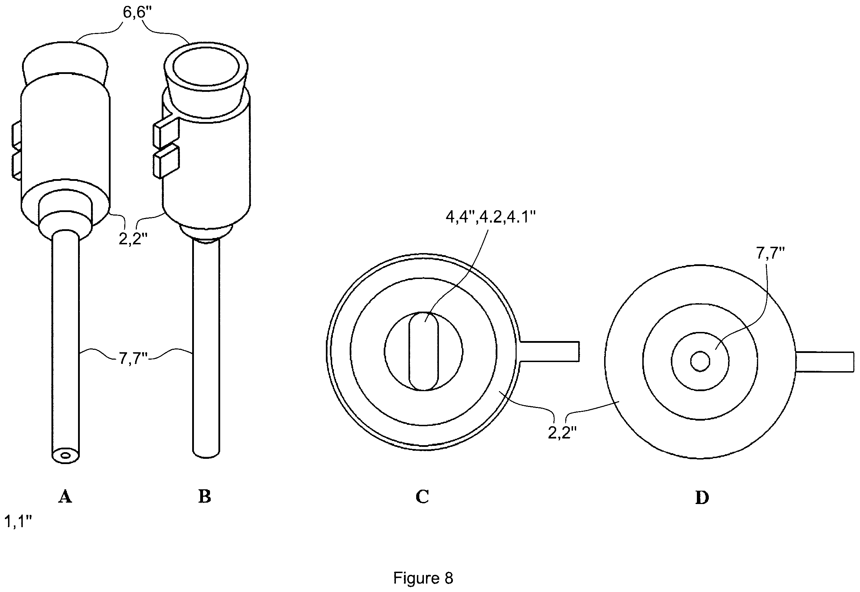

Figure 8 shows side views (panels A and B) and top and bottom views (panels C and D) of a device (1, 1") for collecting and/or handling a liquid sample in accordance with exemplary prototype B of the present invention. The panels A and B show the capillary tube (7, 7") in the lower part and the tubular container (2, 2") including a valve (4, 4") located in the tubular container and being actuated by centrifugal force (such valve not visible), and an interface (6, 6") to a dispensing and/or aspirating device at the upper end of the device. Panels C and D show a top view (panel C) and a bottom view (panel D) of the device. In the top view, through the interface, the valve actuated by centrifugal force may be seen; in panel D, the tubular container and the capillary tube can be seen.

In Figures 8A and B, it can be seen that this embodiment, in particular the prototype B, has the tubular container (2, 2") with an external collar or sleeve (2.2") around it. Such external sleeve (2.2") can be rotated around its longitudinal axis. As can be seen from Figures 8C and D, in the top view of Figure 8C, the valve (4, 4") actuated by centrifugal force can be seen. This valve (4, 4.2, 4.1"), in this particular embodiment is slidably and twistably inserted in the tubular container. The sleeve or collar (2.2") is located around the tubular container. In the bottom view shown in Figure 8D, one can see the opening of the capillary tube.

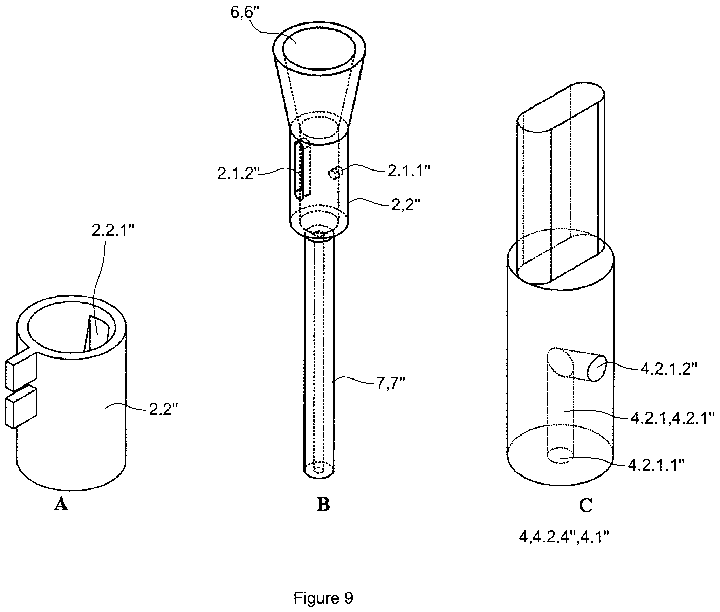

Figure 9 shows the various components of the particular embodiment of Figure 8 of prototype B. The panel A shows a collar (2.2") with a handle attached that allows a rotational movement of the collar. Within the collar in its side wall, there is a recess or cavity (2.2.1") which, together with an opening or hole or channel or recess in the cylindrical body shown in Figure 9B, will form the compartment (5, 5b") in which a component of the liquid sample will be received and enclosed upon exertion of a centrifugal force. The collar/sleeve and the cylindrical body form together the tubular container (2, 2"). The cylindrical body has in its side wall on one side a hole (2.1.1") for allowing access to the recess in the side wall of the collar (which, together with such opening, forms the compartment (5, 5b") for receiving a component of high density of the liquid sample). On the other side of the cylindrical body, there is a venting bypass (2.1.2"), or venting channel or venting groove to allow access of air or to circumvent the fluid communication towards the compartment (5, 5b") for receiving a component. Also shown in Figure 9B is a capillary tube (7, 7") that is part of the tubular container (2, 2") and that is configured to collect and receive the liquid sample prior to separation of the liquid sample by centrifugal force. Furthermore, Figure 9B shows at the top of the cylindrical body, an interface (6, 6") to a dispensing and/or aspirating device (8, 8"). This allows to establish a connection between the cylindrical body and thus the tubular container and the dispensing and/or aspirating device. In the simplest case, such dispensing and/or aspirating device may be a pipette or pipette tip by which liquids may be dispensed from the tubular container, or liquids may be aspirated into such tubular container.

Figure 9C shows the valve (4, 4.2, 4", 4.1") that is located within the tubular container and that is actuated by centrifugal force. In this embodiment, the valve is a piston that has, at its back end, a handle for twisting the valve within the tubular container. Furthermore, it has a hollow channel (4.2.1, 4.2.1") from the front end through the piston and curving or angling towards a side of the piston. Effectively, therefore, this hollow channel allows a fluid communication between the front end of the piston and the side. Depending on the relative position of the piston within the tubular container, a liquid communication can be established between the front end and the compartment for receiving a component of higher density of the liquid sample, or between the front end of the piston and a venting groove that is located in the side wall of the cylindrical body. The piston is slidably and twistably inserted in the cylindrical body and thus in the tubular container and by its relative position with respect to the hollow channel running through it, a fluid connection from the front end of the piston facing the capillary tube where the sample is, to the compartment for receiving a component of high density, or from the front end to the venting groove can be established. If such a fluid connection to the compartment is established, this will allow a movement of highly dense components towards the compartment for receiving such components. If a fluid connection is established from the front end of the piston to the venting groove, this will allow a dispensing or aspirating of liquids, for example located in the capillary tube, which dispensing and/or aspirating can be achieved by exerting air pressure from the interface side of the cylindrical body.

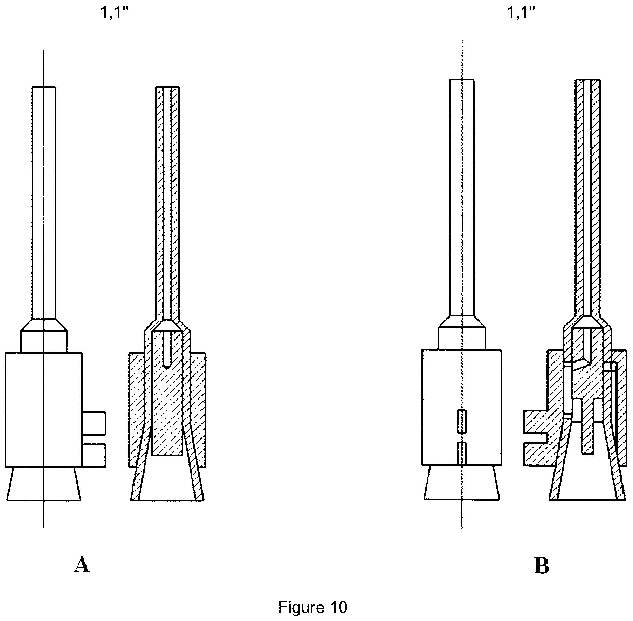

Figure 10 shows an embodiment of a device (1, 1") for collecting and/or handling a liquid sample according to prototype B which has been assembled from its components shown in Figure 9. Panel A shows a side view and a sectional view along the line shown in the side view. In the sectional view in panel A, the handle of the collar can be seen.

Figure 10B shows the same device (1, 1") but from another angle, namely turned around by 90°. Again, there is a side view (left hand side) and a sectional view (right hand side) along the line shown in the side view. The sectional views in Figure 10 also show the valve actuated by a centrifugal force, in this embodiment shown as a piston with the hollow channel running through it from the front end to the side of the piston. In the right hand side of panel B, the valve is positioned such that the channel establishes a fluid connection from the front end of the valve and thus, from the capillary, to the venting channel/venting groove and from there to the back end of the valve to the interface to a dispensing and/or aspirating device. On the right of the tubular container is also shown the compartment for receiving a component of a defined density. In the view shown in Figure 10B, the valve is positioned such that this compartment is closed. If the valve were turned by 180°, a fluid connection would be established from the front end of the valve to the compartment. If a sample was in the capillary tube and at the front end of the valve and if a fluid connection to the compartment was established, then such sample or components thereof may enter the compartment.

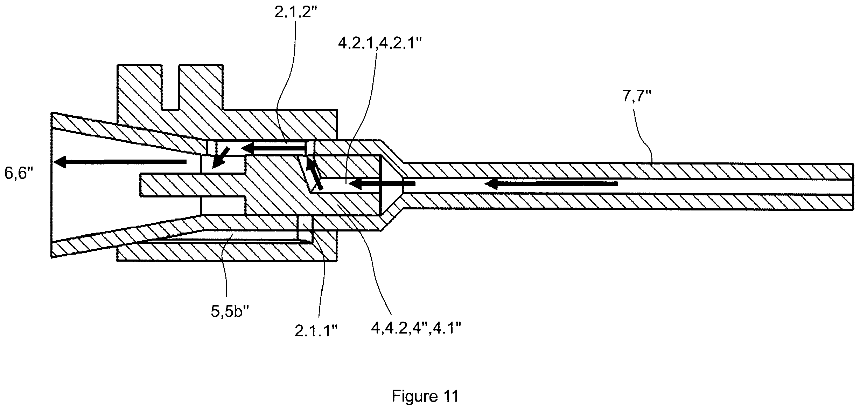

Figure 11 shows the same position of the valve (4, 4.2, 4", 4.1") as shown in Figure 10B and represents the stage where the sample is taken up. More specifically, the sample is sucked into the capillary tube (7, 7") on the right by capillary force but only enters the capillary tube, because beyond the capillary tube, the capillary force declines and there is a relatively sudden increase in diameter of the internal void volume at the position where the capillary tube is attached to the cylindrical body. However, a ventilation of the capillary tube (7, 7") is possible along the channel (4.2.1, 4.2.1") in the piston and through the venting groove (2.1.2") towards the interface (6, 6") to a dispensing and/or aspirating device (8, 8").

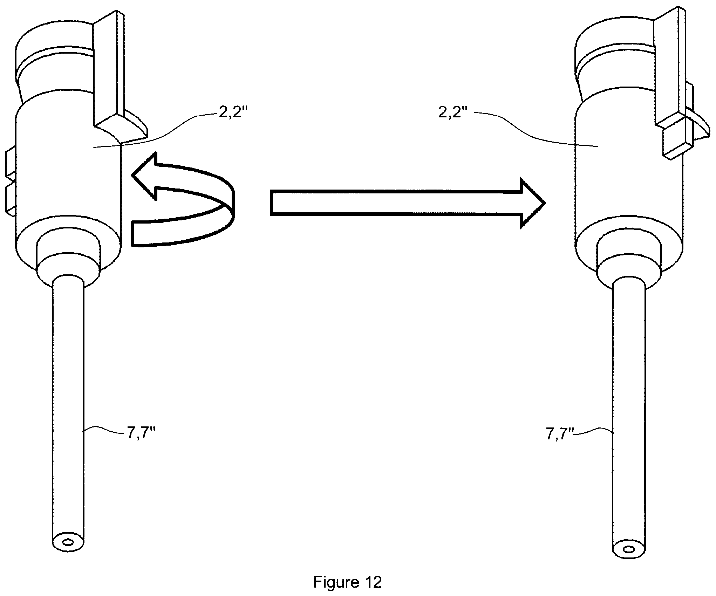

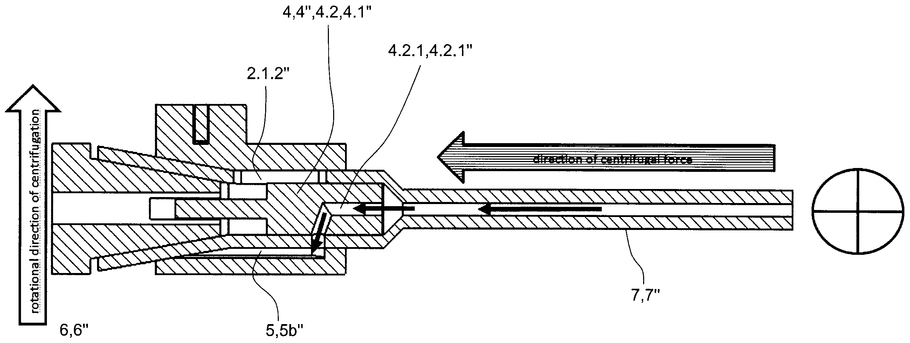

Figure 12 shows the stage where the device including a liquid sample is placed into a centrifuge (centrifuge not shown), and the handle of the collar is turned by 180° such that a fluid connection is established from the capillary tube to the compartment for receiving a component of the liquid sample. The position that is achieved by this twist is shown in Figure 13.

Figure 13 shows a sectional view of the device after the collar has been twisted by 180°. There is now a fluid connection from the capillary tube (7, 7") towards the compartment (5, 5b"). Also shown is the direction of centrifugal force and the rotational direction of centrifugation. The hollow channel now establishes a fluid connection from the front end of the piston to the compartment for receiving a component of the liquid sample. If a centrifugal force acts, one or several components of a higher density will move in the direction of the centrifugal force and will be pushed into the compartment. Also shown in the figure is a part of the centrifuge that established a contact towards the interface to a dispensing and/or aspirating device and holds the device for collecting and/or handling and for separating in position. Also shown is a groove that forms part of the centrifuge in which the back end of the valve actuated by centrifugal force comes to lie. By the centrifugal force, the component(s) having a higher density is collected in the compartment whereas the component(s) with a lower density remains outside of the compartment, e.g. in the hollow channel and in the volume at the front end of the valve and in the capillary tube. Shown on the right hand side of the Figure 13 is the symbolical axis of the centrifuge.

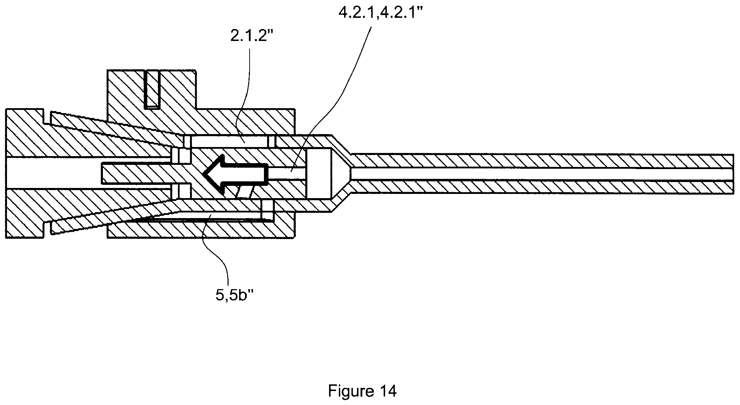

Figure 14 shows the stage where the centrifugal force is even increased by increasing the centrifugal speed such that the valve (4, 4", 4.2, 4.1") is linearly moved even further in the direction of the centrifugal force until it establishes a contact with the stop, which in this case is in the form of a groove with a back wall. Because the valve moves further, relative with respect to the tubular container, the fluid connection to the compartment for receiving the heavy component(s) is interrupted, and the compartment becomes closed, thus effectively isolating the component(s) of higher density in the compartment.

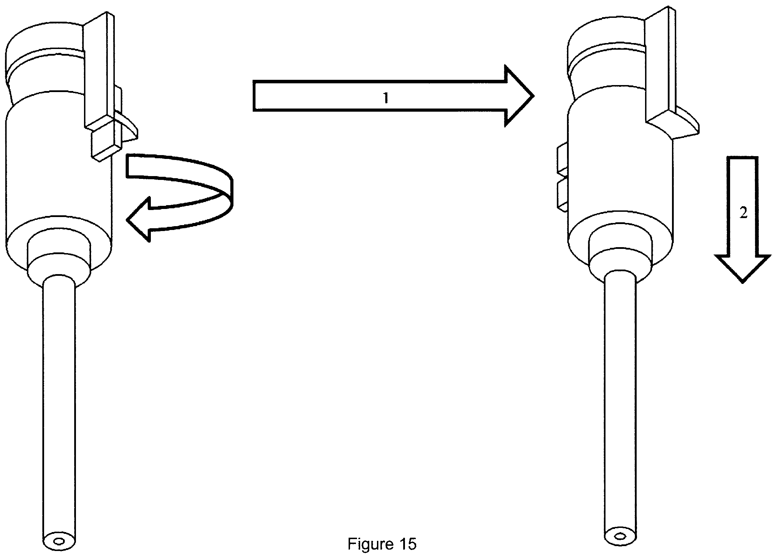

Figure 15 shows the stage where the device is taken out of the centrifuge again, and the collar and the cylindrical body are twisted by 180° relative to each other, as a result of which the position of the valve actuated by centrifugal force is the same as in Figure 11, i.e. a fluid connection to the venting groove is established, although this position is somewhat linearly offset, because the valve has been moved further by the action of the centrifugal force.

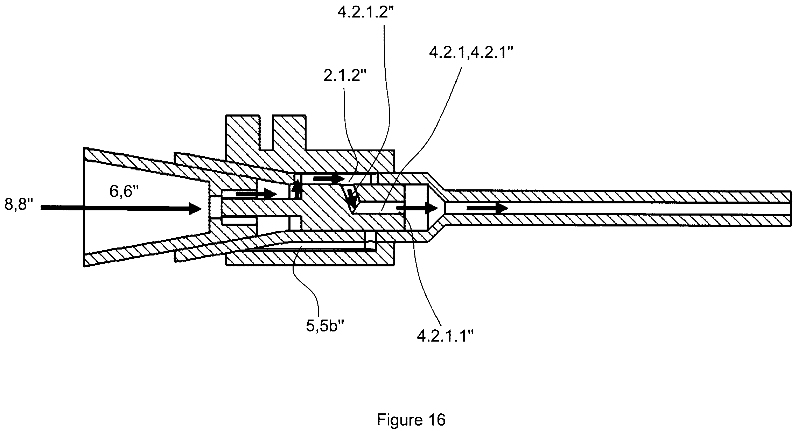

Figure 16 shows this position in a sectional view and makes it clear that there is a fluid connection established between the front end of the piston (4.1.1") through the hollow channel (4.2.1") along the venting groove (2.1.2") and towards the back end (4.1.2") of the piston and the interface (6, 6") to a dispensing and/or aspirating device. If such a dispensing and/or aspirating device (8, 8"), e.g. a pipette, is attached to the interface, air pressure can be exerted along this fluid connection, and the component having a lower density ("light phase") may be pushed out and dispensed from the capillary tube. The "heavy phase" (component(s) with higher density) is in the compartment and is enclosed therein.

Alternatively, by the action of a pipette, also other liquids or air may be aspirated into the capillary tube.

Further modifications of the preferred embodiments are possible without leaving the scope of the invention, which is solely defined by the claims.

**List of reference signs**

| | |
|---|---|
| device for collecting and/or handling a liquid sample | 1, 1', 1" |
| | |
| tubular container | 2, 2', 2" |
| | |
| two opposite ends | 3, 3', 3" |
| end remaining open during separation by centrifugal force | 3.1, 3.1', 3.1.1', 3.1" |
| closed end during separation by centrifugal force | 3.2, 3.2', 3.2.1', 3.2" |
| | |
| valve | 4, 4.1', 4", 4.1" |
| piston slidably inserted and defining compartment | 4.1, 4.1' |
| piston slidably and twistably inserted | 4.2, 4.1 " |
| hollow channel running through said piston | 4.2.1, 4.2.1" |
| | |
| compartment | 5, 5', 5a", 5b" |
| | |
| interface | 6, 6', 6" |
| | |
| capillary tube | 7, 7',7" |
| | |
| dispensing and/or aspirating device | 8, 8', 8" |
| | |
| insert (for a centrifuge) | 9, 9', 9" |
| receptacle | 9.1, 9.1',9.1" |
| volume for receiving device | 9.1.1, 9.1.1',9.1.1" |
| exterior end | 9.1.2, 9.2.2',9.1.2" |
| interior end | 9.1.3, 9.2.3',9.1.3" |
| stop | 9.1.4,9.2.1',9.1.4" |
| | |
| centrifuge | 10, 10', 10" |

**Prototype A**

| | |
|---|---|
| Device for collecting and/or handling a liquid sample or "assembled device" or "assembly device" | 1' |
| device for fractionating a liquid into components | 1.1' |
| device for obtaining a liquid | 1.2' |
| | |
| open-ended cylindrical vessel | 2' |
| first tubular channel | 2.1' |
| second tubular channel | 2.2' |
| | |
| upper and lower parts of cylindrical vessel | 3' |
| lower part of cylindrical vessel | 3.1' |
| upper part of cylindrical vessel | 3.2' |
| lower end of cylindrical vessel | 3.1.1' |
| upper end of cylindrical vessel | 3.2.1' |
| | |
| piston | 4.1' |
| closed lower portion of piston | 4.1.2' |
| open upper portion of piston | 4.1.3' |
| collar at upper portion | 4.1.4' |
| interior space of piston | 4.1.5' |
| mandrel inserted in interior space | 4.1.6' |
| tip of mandrel | 4.1.6.1' |
| head of mandrel | 4.1.6.2' |
| channel running through mandrel | 4.1.6.3' |
| | |
| space for receiving a liquid | 5' |
| | |
| interface | 6' |
| | |
| capillary tube | 7' |
| lower part of capillary tube | 7.1' |
| upper part of capillary tube | 7.2' |
| cylindrical body | 7.3' |
| lower end of cylindrical body | 7.3.1' |
| upper end of cylindrical body | 7.3.2' |
| collar at upper end of cylindrical body | 7.3.3' |
| | |
| dispensing and/or aspirating device | 8' |
| | |
| insert (for a centrifuge) | 9' |
| receptacle | 9.1' |
| volume for receiving device | 9.1.1' |
| guide means | 9.2' |
| pin of guide means | 9.2.1' |
| exterior end of guide means | 9.2.2' |
| interior end of guide means | 9.2.3' |
| | |
| base plate of insert | 9.3' |
| centrifuge | 10' |

**Prototype B**

| | |
|---|---|
| Device for separating a liquid sample into sample components | 1" |
| | |
| Tubular vessel | 2" |
| Inner wall of tubular vessel | 2.1" |
| Hole in wall | 2.1.1" |
| Through opening functioning as a vent | 2.1.2" |
| Sleeve around tubular vessel | 2.2" |
| Cavity in sleeve | 2.2.1" |
| | |
| Two opposite ends | 3" |
| end remaining open during separation by centrifugal force | 3.1" |
| closed end during separation by centrifugal force | 3.2" |
| | |
| Means for isolating and sealing second space/valve | 4" |
| Piston | 4.1" |
| Front end of piston | 4.1.1" |
| Back end of piston | 4.1.2" |
| Channel inside piston | 4.2.1" |
| Opening of channel at front end of piston | 4.2.1.1" |
| Second Opening of channel at side of piston | 4.2.1.2" |
| | |
| First space for receiving a liquid sample or remaining part of liquid sample after centrifugation | 5a" |
| Second space for accommodating a sample component | 5b" |
| | |
| interface | 6" |
| | |
| capillary tube | 7" |
| | |
| dispensing and/or aspirating device | 8" |
| | |
| insert (for a centrifuge) | 9" |
| receptacle | 9.1" |
| volume for receiving device | 9.1.1" |
| exterior end | 9.1.2" |
| interior end | 9.1.3" |
| stop | 9.1.4" |
| | |
| centrifuge | 10" |

## Claims

1. A device (1, 1', 1") for collecting and/or handling a liquid sample and for separating said liquid sample into different components having different densities, said device comprising:
- a tubular container (2, 2', 2") having two opposite ends (3, 3', 3") and being adapted to receive a liquid sample,
wherein said two ends are configured such that said two ends are open when the sample is collected, and one end (3.2, 3.2', 3.2.1', 3.2") is closed and the other end (3.1, 3.1', 3.1.1', 3.1") remains open when a separation process for separating said liquid sample into different components by centrifugal force takes place, wherein said end that remains open when a separation process for separating said liquid sample into different components by centrifugal force takes place, is a permanently open end,
- a valve (4, 4.1', 4", 4.1") located in said tubular container and being actuated by centrifugal force,
- a compartment (5, 5', 5a", 5b") located in and forming part of said tubular container which compartment is configured such that it receives a component of said liquid sample and becomes closed (5, 5', 5b") by said valve when a defined centrifugal force is exerted upon said tubular container, thereby separating said component within said compartment (5, 5', 5b") from other component(s) of said liquid sample outside said closed compartment,
- an interface (6, 6', 6") to a dispensing and/or aspirating device (8, 8', 8"), said interface being configured to establish a connection between said tubular container and said dispensing and/or aspirating device, such that when such connection is established, said dispensing and/or aspirating device may dispense liquid(s) from said tubular container, e. g. said other component(s) of said liquid sample outside said compartment, or said dispensing and/or aspirating device may aspirate liquid(s) into said tubular container, e. g. liquids for further processing said liquid sample.

2. The device according to claim 1, further comprising:
- a capillary tube (7, 7', 7") located in said tubular container, or being part thereof, and being configured to collect and receive said liquid sample prior to separation of said liquid sample by centrifugal force.

3. The device according to claim 2, wherein said capillary tube (7, 7', 7") is an end to end capillary tube, wherein one end of said capillary tube is located at the permanently open end (3.1, 3.1', 3.1.1', 3.1") of said tubular container (2, 2', 2") which remains open when a separation process by centrifugal force takes place, and/or forms such permanently open end (3.1, 3.1', 3.1.1', 3.1") of said tubular container (2, 2', 2") and/or is in fluid connection with such permanently open end, and the other end of said capillary tube is located within said tubular container or attached thereto and is, prior to a separation process for separating said liquid sample into different components by centrifugal force, in fluid connection with said compartment (5, 5', 5a", 5b") configured to receive a component of said liquid sample.

4. The device according to any of the foregoing claims, wherein said valve is
- a piston (4.1, 4.1') slidably inserted in said tubular container and defining, by one of the ends of said piston and by the internal geometry of said tubular container, said compartment configured to receive a component of said sample, or
- a piston (4.2, 4.1") slidably and twistably inserted in said tubular container, said piston having a front end facing in the direction of said end of said tubular container remaining open during a separation process by centrifugal force and a back end facing in the opposite direction, and said piston having a hollow channel (4.2.1, 4.2.1") running through said piston from said front end to a side of said piston, said hollow channel allowing access to said compartment for receiving a component of said liquid sample, when said hollow channel is in fluid connection with said compartment.

5. The device according to any of the foregoing claims, wherein said tubular container is not evacuated, e.g. of air, prior to receiving a liquid sample.

6. The device according to any of the foregoing claims, further comprising a dispensing and/or aspirating device (8, 8', 8") connected to said tubular container through said interface (6, 6', 6"), forming a fluid connection between said dispensing and/or aspirating device and said tubular container.

7. An insert (9, 9', 9") for a centrifuge comprising:
- a receptacle (9.1, 9.1', 9.1") for a device (1, 1', 1") according to any of claims 1-5, said receptacle encompassing a volume (9.1.1, 9.1.1', 9.1.1") for receiving said device and allowing the positioning of said device in a centrifugal direction, said receptacle having an exterior end (9.1.2, 9.2.2', 9.1.2") and an interior end and (9.1.3, 9.2.3', 9.1.3")being configured such that, during centrifugation, any centrifugal force exerted acts towards the exterior end of said receptacle;
- a stop (9.1.4, 9.2.1', 9.1.4")located at said exterior end of said receptacle against which, during centrifugation, said device according to any of claims 1-5 is pressed, said stop being configured to establish a contact to said valve (4, 4.1', 4", 4.1")located in said tubular container of said device and being actuated by centrifugal force; and
- a device according to any of claims 1-5.

8. The insert according to claim 7, wherein said stop is a pin, a tappet, a stamp, a pillar, a groove with a back wall, a pestle, an elevation from the exterior end, or a wall of said receptacle at said exterior end.

9. A centrifuge (10, 10', 10") comprising the insert according to any of claims 7-8.

10. A method of separating a liquid sample into components, said method comprising the steps:
- using the device (1, 1', 1") according to any of claims 1-5 for receiving a liquid sample therein in said tubular container (2, 2', 2"),
- separating at least one sample component of a defined density from the remaining part of said liquid sample or from other component(s) thereof into said compartment (5, 5', 5a", 5b") by centrifugation of said device according to any of claims 1-5, preferably at a first centrifugation speed,
- closing and sealing said compartment (5, 5', 5b") by centrifugation, preferably at a second centrifugation speed, wherein said second centrifugation speed is preferably higher than said first centrifugation speed,
- stopping the centrifugation and, optionally, manipulating said separated at least one sample component of a defined density or the remaining part of the sample or said other component(s) thereof by adding thereto or withdrawing therefrom one or several defined volumes of liquids by means of a dispensing and/or aspirating device (8, 8', 8") temporarily connected to said device according to any of claims 1-5 via said interface thereof.

11. The method according to claim 10 or the device according to any of claims 1-6, wherein the liquid sample is a biological liquid including at least one solid component, e.g. a cellular component, and at least one liquid component.

12. The method according to any of claims 10-11, wherein the liquid sample is selected from blood, sweat, tears, sputum, semen, lymph, ascites, amniotic fluid, bile, breast milk, synovial fluid, saliva, peritoneal fluid, pericardial fluid, cerebrospinal fluid, chyle, and urine, wherein, preferably, said liquid is blood.

## Patentansprüche

1. Vorrichtung (1, 1', 1") zum Sammeln und/oder Handhaben einer flüssigen Probe und zum Trennen der flüssigen Probe in verschiedene Bestandteile mit unterschiedlichen Dichten, wobei die Vorrichtung umfasst:
- einen röhrenförmigen Behälter (2, 2', 2") mit zwei gegenüberliegenden Enden (3, 3', 3"), der zur Aufnahme einer flüssigen Probe geeignet ist,
wobei die beiden Enden so konfiguriert sind, dass die zwei Enden offen sind, wenn die Probe gesammelt wird, und ein Ende (3.2, 3.2', 3.2.1', 3.2") geschlossen ist und das andere Ende (3.1, 3.1', 3.1.1', 3.1") offen bleibt, wenn ein Trennungsprozess zum Trennen der flüssigen Probe in verschiedene Bestandteile mittels Zentrifugalkraft stattfindet, wobei das Ende, das offen bleibt, wenn ein Trennungsprozess zum Trennen der flüssigen Probe in verschiedene Bestandteile durch Zentrifugalkraft stattfindet, ein dauerhaft offenes Ende ist,
- ein Ventil (4, 4.1', 4", 4.1"), das sich in dem röhrenförmigen Behälter befindet und mittels Zentrifugalkraft betätigt wird,
- ein Fach (5, 5', 5a", 5b"), das sich in dem röhrenförmigen Behälter befindet und Teil davon bildet, wobei das Fach so konfiguriert ist, dass es einen Bestandteil der flüssigen Probe aufnimmt und durch das Ventil geschlossen wird (5, 5', 5b"), wenn eine definierte Zentrifugalkraft auf den röhrenförmigen Behälter ausgeübt wird, wodurch der Bestandteil innerhalb des Fachs (5, 5', 5b") von einem anderen Bestandteil (von anderen Bestandteilen) der flüssigen Probe außerhalb des geschlossenen Fachs getrennt wird,
- eine Schnittstelle (6, 6', 6") zu einer Abgabe- und/oder Ansaugvorrichtung (8, 8', 8"), wobei die Schnittstelle so konfiguriert ist, dass sie eine Verbindung zwischen dem röhrenförmigen Behälter und der Abgabe- und/oder Ansaugvorrichtung herstellt, so dass, wenn eine solche Verbindung hergestellt worden ist, die Abgabe- und/oder Ansaugvorrichtung Flüssigkeit(en) aus dem röhrenförmigen Behälter abgeben kann, z. B. den (die) anderen Bestandteil(e) der flüssigen Probe außerhalb des Fachs, oder die Abgabe- und/oder Ansaugvorrichtung Flüssigkeit(en) in den röhrenförmigen Behälter ansaugen kann, z. B. Flüssigkeiten zum weiteren Behandeln der flüssigen Probe.

2. Vorrichtung nach Anspruch 1, weiterhin umfassend:
- ein Kapillarröhrchen (7, 7', 7"), das sich in dem röhrenförmigen Behälter befindet oder Teil davon ist, und das konfiguriert ist, die flüssige Probe einzusammeln und aufzunehmen vor einer Trennung der flüssigen Probe durch Zentrifugalkraft.

3. Vorrichtung nach Anspruch 2, wobei das Kapillarröhrchen (7, 7', 7") ein End-zu-End-Kapillarröhrchen ist, wobei ein Ende des Kapillarröhrchens sich an dem dauerhaft offenen Ende (3.1, 3.1', 3.1.1', 3.1") des röhrenförmigen Behälters (2, 2', 2") befindet, welches offen bleibt, wenn ein Trennungsprozess durch Zentrifugalkraft stattfindet, und/oder ein solches dauerhaft offenes Ende (3.1, 3.1', 3.1.1', 3.1") des röhrenförmigen Behälters (2, 2', 2") bildet, und/oder in fluider Verbindung mit dem dauerhaft offenen Ende steht, und wobei das andere Ende des Kapillarröhrchens sich innerhalb des röhrenförmigen Behälters befindet oder daran angeheftet ist, und, vor einem Trennungsprozess zum Trennen der flüssigen Probe in verschiedene Bestandteile mittels Zentrifugalkraft, in fluider Verbindung mit dem Fach (5, 5', 5a", 5b") steht, welches zur Aufnahme eines Bestandteils der flüssigen Probe konfiguriert ist.

4. Vorrichtung nach einem der vorangehenden Ansprüche, wobei das Ventil
- ein Kolben (4.1, 4.1'), der gleitend in den röhrenförmigen Behälter eingesetzt ist und mittels einem der Enden des Kolbens und mittels der internen Geometrie des röhrenförmigen Behälters das Fach definiert, welches zur Aufnahme eines Bestandteils der Probe konfiguriert ist, oder
- ein Kolben (4.2, 4.1"), der gleitend und verdrehbar in den röhrenförmigen Behälter eingesetzt ist, wobei der Kolben ein vorderes Ende hat, welches in die Richtung des Endes des röhrenförmigen Behälters gerichtet ist, welches während eines Trennungsprozesses mit Zentrifugalkraft offen bleibt, sowie ein rückwärtiges Ende, welches in die entgegengesetzte Richtung gerichtet ist, und wobei der Kolben einen hohlen Kanal (4.2.1, 4.2.1") hat, welcher durch den Kolben vom vorderen Ende zu einer Seite des Kolbens läuft, wobei der hohle Kanal einen Zugang zu dem Fach zum Aufnehmen eines Bestandteils der flüssigen Probe ermöglicht, wenn der hohle Kanal in fluider Verbindung mit dem Fach steht,
ist.

5. Vorrichtung nach einem der vorangehenden Ansprüche, wobei der röhrenförmige Behälter nicht evakuiert ist, zum Beispiel von Luft, bevor er eine flüssige Probe aufnimmt.

6. Vorrichtung nach einem der vorangehenden Ansprüche, weiterhin umfassend eine Abgabe- und/oder Ansaugvorrichtung (8, 8', 8"), die mit dem röhrenförmigen Behälter durch die Schnittstelle (6, 6', 6") verbunden ist, welches eine fluide Verbindung zwischen der Abgabe- und/oder Ansaugvorrichtung und dem röhrenförmigen Behälter bildet.

7. Einsatz (9, 9', 9") für eine Zentrifuge, umfassend:
- ein Aufnahmegefäß (9.1, 9.1', 9.1") für eine Vorrichtung (1, 1', 1") nach einem der Ansprüche 1-5, wobei das Aufnahmegefäß ein Volumen umfasst (9.1.1, 9.1.1', 9.1.1") zum Aufnehmen der Vorrichtung und zum Ermöglichen der Positionierung der Vorrichtung in einer Zentrifugalrichtung, wobei das Aufnahmegefäß ein äußeres Ende (9.1.2, 9.2.2', 9.1.2") und ein inneres Ende (9.1.3, 9.2.3', 9.1.3") hat und so konfiguriert ist, dass, während der Zentrifugation, jegliche ausgeübte Zentrifugalkraft in Richtung des äußeren Endes des Aufnahmegefäßes wirkt;
- einen Anschlag (9.1.4, 9.2.1', 9.1.4"), der sich am äußeren Ende des Aufnahmegefäßes befindet, gegen den, während einer Zentrifugation, die Vorrichtung nach einem der Ansprüche 1-5 gedrückt wird, wobei der Anschlag so konfiguriert ist, dass er einen Kontakt mit dem Ventil (4, 4.1', 4", 4.1") herstellt, welches sich in dem röhrenförmigen Behälter der Vorrichtung befindet und mittels Zentrifugalkraft betätigt wird; und
- eine Vorrichtung nach einem der Ansprüche 1-5.

8. Einsatz nach Anspruch 7, wobei der Anschlag ein Stift, ein Stößel, ein Stempel, eine Säule, eine Nut mit einer Rückwand, ein Pistill, eine Erhöhung von dem äußeren Ende oder eine Wand des Aufnahmegefäßes am äußeren Ende ist.

9. Zentrifuge (10, 10', 10"), umfassend den Einsatz nach einem der Ansprüche 7-8.

10. Verfahren zum Trennen einer flüssigen Probe in Bestandteile, wobei das Verfahren die Schritte umfasst:
- Verwenden der Vorrichtung (1, 1', 1") nach einem der Ansprüche 1-5 zum Aufnehmen einer flüssigen Probe darin in dem röhrenförmigen Behälter (2, 2', 2"),
- Trennen von wenigsten einem Probenbestandteil einer definierten Dichte von dem verbleibenden Teil der flüssigen Probe oder von einem anderen Bestandteil (von anderen Bestandteilen) davon in dem Fach (5, 5', 5a", 5b") mittels Zentrifugation der Vorrichtung nach einem der Ansprüche 1-5, bevorzugt bei einer ersten Zentrifugationsgeschwindigkeit ,
- Verschließen und Versiegeln des Fachs (5, 5', 5b") durch Zentrifugation, bevorzugt bei einer zweiten Zentrifugationsgeschwindigkeit, wobei die zweite Zentrifugationsgeschwindigkeit bevorzugt höher als die erste Zentrifugationsgeschwindigkeit ist,
- Stoppen der Zentrifugation und, wahlweise, Handhaben des getrennten wenigstens einen Probenbestandteils einer definierten Dichte oder des verbleibenden Teils der Probe oder des anderen Bestandteils (der anderen Bestandteile) davon durch Zugeben von einem oder mehreren definierten Volumina an Flüssigkeiten dazu oder Entnahme derselben davon, mittels einer Abgabe- und/oder Ansaugvorrichtung (8, 8', 8"), die vorübergehend mit der Vorrichtung nach einem der Ansprüche 1-5 über deren Schnittstelle verbunden ist.

11. Verfahren nach Anspruch 10 oder Vorrichtung nach einem der Ansprüche 1-6, wobei die flüssige Probe eine biologische Flüssigkeit ist, die wenigstens einen festen Bestandteil enthält, z. B. einen zellulären Bestandteil, und wenigstens einen flüssigen Bestandteil.

12. Verfahren nach einem der Ansprüche 10-11, wobei die flüssige Probe ausgewählt ist aus Blut, Schweiß, Tränen, Sputum, Sperma, Lymphe, Aszites, Amnionflüssigkeit, Galle, Muttermilch, Synovialflüssigkeit, Speichel, Peritonealflüssigkeit, Perikardflüssigkeit, Cerebrospinalflüssigkeit, Chyle und Urin, wobei, bevorzugt, die Flüssigkeit Blut ist.

## Revendications

1. Dispositif (1, 1', 1") pour collecter et/ou manipuler un échantillon liquide et pour séparer ledit échantillon liquide en différents composants ayant des densités différentes, ledit dispositif comprenant :
un récipient tubulaire (2, 2', 2") ayant deux extrémités opposées (3, 3', 3") et étant adapté pour recevoir un échantillon liquide,
dans lequel lesdites deux extrémités sont configurées de sorte que lesdites deux extrémités sont ouvertes lorsque l'échantillon est collecté, et une extrémité (3.2, 3.2', 3.2.1', 3.2") est fermée et l'autre extrémité (3.1, 3.1', 3.1.1', 3.1") reste ouverte lorsqu'un processus de séparation pour séparer ledit échantillon liquide en différents composants par force centrifuge a lieu, dans lequel ladite extrémité qui reste ouverte lorsqu'un processus de séparation pour séparer ledit échantillon liquide en différent composants par force centrifuge a lieu, est une extrémité ouverte en permanence,
une valve (4, 4.1', 4", 4.1") positionnée dans ledit récipient tubulaire et étant actionnée par la force centrifuge,
un compartiment (5, 5', 5a", 5b") positionné dans et faisant partie dudit récipient tubulaire, lequel compartiment est configuré de sorte qu'il reçoit un composant dudit échantillon liquide et se ferme (5, 5', 5b") grâce à ladite valve lorsqu'une force centrifuge définie est exercée sur ledit récipient tubulaire, séparant ainsi ledit composant dans ledit compartiment (5, 5', 5b") de l'autre (des autres) composant(s) dudit échantillon liquide à l'extérieur dudit compartiment fermé,
une interface (6, 6', 6") sur un dispositif de distribution et/ou d'aspiration (8, 8', 8"), ladite interface étant configurée pour établir une connexion entre ledit récipient tubulaire et ledit dispositif de distribution et/ou d'aspiration, de sorte que lorsque une telle connexion est établie, ledit dispositif de distribution et/ou d'aspiration peut distribuer le (les) liquide(s) dudit récipient tubulaire, par exemple ledit autre composant (lesdits autres composants) dudit échantillon liquide à l'extérieur dudit compartiment, ou bien ledit dispositif de distribution et/ou d'aspiration peut aspirer le (les) liquide(s) dans ledit récipient tubulaire, par exemple les liquides pour continuer à traiter ledit échantillon liquide.

2. Dispositif selon la revendication 1, comprenant en outre :
un tube capillaire (7, 7', 7") positionné dans ledit récipient tubulaire, ou faisant partie de ce dernier, et étant configuré pour collecter et recevoir ledit échantillon liquide avant la séparation dudit échantillon liquide par la force centrifuge.

3. Dispositif selon la revendication 2, dans lequel ledit tube capillaire (7, 7', 7") est un tube capillaire bout à bout, dans lequel une extrémité dudit tube capillaire est positionnée au niveau de l'extrémité ouverte de manière permanente (3.1, 3.1', 3.1.1', 3.1") dudit récipient tubulaire (2, 2', 2") qui reste ouverte lorsqu'un processus de séparation par force centrifuge a lieu, et/ou forme cette extrémité ouverte de manière permanente (3.1, 3.1', 3.1.1', 3.1") dudit récipient tubulaire (2, 2', 2") et/ou est en raccordement de fluide avec une telle extrémité ouverte de manière permanente, et l'autre extrémité dudit tube capillaire est positionnée dans ledit récipient tubulaire ou fixée à ce dernier, et est, avant un processus de séparation pour séparer ledit échantillon liquide en différents composants par la force centrifuge, en raccordement de fluide avec ledit compartiment (5, 5', 5a", 5b") configuré pour recevoir un composant dudit échantillon liquide.

4. Dispositif selon l'une quelconque des revendications précédentes, dans lequel ladite valve est :
un piston (4.1, 4.1') inséré, de manière coulissante, dans ledit récipient tubulaire et définissant, par l'une des extrémités dudit piston et par la géométrie interne dudit récipient tubulaire, ledit compartiment configuré pour recevoir un composant dudit échantillon, ou bien
un piston (4.2, 4.1") inséré de manière coulissante et par torsion dans ledit récipient tubulaire, ledit piston ayant une extrémité avant orientée dans la direction de ladite extrémité dudit récipient tubulaire restant ouverte pendant un processus de séparation par la force centrifuge et une extrémité arrière orientée dans la direction opposée, et ledit piston ayant un canal creux (4.2.1, 4.2.1") s'étendant à travers ledit piston, de ladite extrémité avant à un côté dudit piston, ledit canal creux permettant l'accès audit compartiment pour recevoir un composant dudit échantillon liquide, lorsque ledit canal creux est en raccordement de fluide avec ledit compartiment.

5. Dispositif selon l'une quelconque des revendications précédentes, dans lequel ledit récipient tubulaire n'est pas mis sous vide, par exemple vide d'air, avant de recevoir un échantillon liquide.

6. Dispositif selon l'une quelconque des revendications précédentes, comprenant en outre un dispositif de distribution et/ou d'aspiration (8, 8', 8") raccordé audit récipient tubulaire par le biais de ladite interface (6, 6', 6"), formant un raccordement de fluide entre ledit dispositif de distribution et/ou d'aspiration et ledit récipient tubulaire.

7. Insert (9, 9', 9") pour une centrifugeuse comprenant :
un réceptacle (9.1, 9.1', 9.1") pour un dispositif (1, 1', 1") selon l'une quelconque des revendications 1 à 5, ledit réceptacle englobant un volume (9.1.1, 9.1.1', 9.1.1") pour recevoir ledit dispositif et permettre le positionnement dudit dispositif dans une direction centrifuge, ledit réceptacle ayant une extrémité extérieure (9.1.2, 9.2.2', 9.1.2") et une extrémité intérieure (9.1.3, 9.2.3', 9.1.3"), étant configuré de sorte que, pendant la centrifugation, toute force centrifuge exercée agit vers l'extrémité extérieure dudit réceptacle ;
une butée (9.1.4, 9.2.1', 9.1.4") positionnée au niveau de ladite extrémité extérieure dudit réceptacle contre laquelle, pendant la centrifugation, ledit dispositif selon l'une quelconque des revendications 1 à 5 est comprimé, ladite butée étant configurée pour établir un contact avec ladite valve (4, 4.1', 4", 4.1") positionnée dans ledit récipient tubulaire dudit dispositif et étant actionnée par la force centrifuge ; et
un dispositif selon l'une quelconque des revendications 1 à 5.

8. Insert selon la revendication 7, dans lequel ladite butée est une broche, un poussoir, un poinçon, un pilier, une rainure avec une paroi arrière, un pilon, une élévation par rapport à l'extrémité extérieure ou une paroi dudit réceptacle au niveau de ladite extrémité extérieure.

9. Centrifugeuse (10, 10', 10") comprenant l'insert selon l'une quelconque les revendications 7 à 8.

10. Procédé pour séparer un échantillon liquide en composants, ledit procédé comprenant les étapes consistant à :
utiliser le dispositif (1, 1', 1") selon l'une quelconque des revendications 1 à 5 pour recevoir un échantillon liquide dans ledit récipient tubulaire (2, 2', 2"),
séparer au moins un composant d'échantillon d'une densité définie de la partie résiduelle dudit échantillon liquide ou de son autre composant (leurs autres composants) dans ledit compartiment (5, 5', 5a", 5b") par centrifugation dudit dispositif selon l'une quelconque des revendications 1 à 5, de préférence à une première vitesse de centrifugation,
fermer et sceller ledit compartiment (5, 5', 5b") par centrifugation, de préférence à une seconde vitesse de centrifugation, dans lequel ladite seconde vitesse de centrifugation est de préférence supérieure à ladite première vitesse de centrifugation,
arrêter la centrifugation et, facultativement, manipuler ledit au moins un composant d'échantillon séparé d'une densité définie ou la partie résiduelle de l'échantillon ou ledit (lesdits) autre(s) composant(s) de ce dernier en y ajoutant ou en retirant un ou plusieurs volumes définis de liquides au moyen d'un dispositif de distribution et/ou d'aspiration (8, 8', 8") temporairement raccordé audit dispositif selon l'une quelconque des revendication 1 à 5, via ladite interface de ce dernier.

11. Procédé selon la revendication 10 ou dispositif selon l'une quelconque des revendications 1 à 6, dans lequel l'échantillon liquide est un échantillon biologique comprenant au moins un composant solide, par exemple, un composant cellulaire, et au moins un composant liquide.

12. Procédé selon l'une quelconque des revendications 10 à 11, dans lequel l'échantillon liquide est sélectionné parmi le sang, la sueur, les larmes, les crachats, le sperme, la lymphe, l'ascite, le liquide amniotique, la bile, le lait maternel, le fluide synovial, la salive, le fluide péritonéal, le fluide péricardique, le fluide cérébrospinal, le chyle et l'urine, dans lequel de préférence ledit liquide est du sang.
